# EUROPÄISCHE PATENTSCHRIFT

(11) **EP 4 327 432 B1**
(45) Veröffentlichungstag und Bekanntmachung des Hinweises auf die Patenterteilung: **07.08.2024**
(21) Anmeldenummer: 22725816.7
(22) Anmeldetag: 26.04.2022
(51) Int. Cl.: H02J 7/00, H02M 7/483, H02M 1/32

(54) **ENERGIEVERSORGUNGSSYSTEM MIT BATTERIEMODULEN SOWIE VERFAHREN ZUM BETRIEB EINES ENERGIEVERSORGUNGSSYSTEMS**
ENERGY SUPPLY SYSTEM HAVING BATTERY MODULES, AND METHOD FOR OPERATING AN ENERGY SUPPLY SYSTEM
SYSTÈME D'ALIMENTATION EN ÉNERGIE COMPRENANT DES MODULES DE BATTERIE ET PROCÉDÉ DE FONCTIONNEMENT D'UN SYSTÈME D'ALIMENTATION EN ÉNERGIE

(30) Priorität: 06.05.2021 DE 102021111866
(43) Veröffentlichungstag der Anmeldung: 28.02.2024
(73) Patentinhaber: Instagrid GmbH, 71636 Ludwigsburg (DE)
(72) Erfinder: BERNING, Sebastain, 70597 Stuttgart (DE); HEZARIYAN, Reza, 70469 Stuttgart (DE)
(74) Vertreter: Patentanwälte Bauer Vorberg Kayser
(86) Internationale Anmeldenummer: PCT/EP2022/061097
(87) Internationale Veröffentlichungsnummer: WO 2022/233646

(56) Entgegenhaltungen:
- DE-A1- 102008 021 542
- DE-A1- 102019 110 177
- US-A1- 2017 062 793

## Beschreibung

Die Erfindung betrifft ein Energieversorgungssystem mit mehreren Batteriemodulen gemäß dem Oberbegriff des Patentanspruchs 1 und ein Verfahren zum Betrieb eines Energieversorgungssystems gemäß dem Oberbegriff des Anspruchs 13.

Zur mobilen Stromversorgung von leistungsfähigen Arbeitsmaschinen, wie z. B. Diamantbohrgerät, Hochdruckreinigern oder Industriestaubsaugern, kommen heute fast ausschließlich Stromaggregate mit Verbrennungsmotoren zum Einsatz. Das gilt insbesondere für Maschinen mit einer elektrischen Aufnahmeleistung über 1 kW. Aufgrund der zunehmenden Umwelt- und Gesundheitsbelastung durch Abgase und Lärm ist es wünschenswert, solche Geräte mit Batteriespeichern zu betreiben.

Eine praktikable Lösung sind tragbare Batteriespeicher, die an einem Ausgang direkt eine netzübliche Wechselspannung bereitstellen, beispielsweise 230 V/50 Hz oder 115 V/60 Hz. Dieser Ausgang kann z. B. als Steckvorrichtung ausgeführt sein, an der sich handelsübliche Netzverbraucher anschließen lassen. Solche Batteriespeicher sind heute am Markt in einer Vielzahl von verschiedenen Ausführungen erhältlich. Die verfügbaren Geräte haben aber Nachteile, die ihre Verwendung erheblich einschränken. So bewegt sich ihre technische Ausführung in einem Spannungsfeld zwischen Ausgangsleistung und Gewicht. Batteriespeicher mit einer hohen Ausgangsleistung > 2,5 kW sind i. d. R. mit einem Gewicht > 20 kg im Sinne aktueller Arbeitsschutzbedingungen nicht mehr von einer Person zu tragen oder bieten eine zu geringe Speicherkapazität (< 1 kWh). Batteriespeicher mit einer geringeren Ausgangsleistung sind zwar leichter, können aber für die beschriebenen Anwendungsfälle nicht verwendet werden.

Neben der durchschnittlich bereitgestellten Ausgangsleistung spielt auch die sog. Überlastfähigkeit eine Rolle. Handelsübliche Batteriespeicher stellen kurzfristig (wenige Sekunden) typischerweise 50 % mehr Strom bereit als im Dauerbetrieb. Große Verbraucher, wie z. B. solche mit sog. Kondensatormotoren (einphasige Asynchronmaschinen), benötigen zum Anlauf aber bis zu zehnmal mehr Strom.

Während dies am Stromnetz kein Problem darstellt, gibt es für den mobilen Betrieb mit Batterien bisher keine Lösung.

US 8 994 336 B2 beschreibt eine Weiterentwicklung, bei der die Batteriezellen derart in Serie angeordnet sind, dass ihre Spannung oberhalb der Scheitelspannung der zu erzeugenden Wechselspannung liegt. Hierdurch werden sowohl die Überlastfähigkeit als auch die Leistungsdichte des Batteriespeichers verbessert. Zur Erzeugung der Wechselspannung wird aber weiter ein Wechselrichter üblicher Bauart verwendet. Auch wird weiter ein Ladegerät für die Batterien verwendet, welches das Gewicht des Batteriespeichers erhöht.

Neben elektrischen Leistungseigenschaften, Baugröße, Gewicht etc. spielt ebenso die elektrische Sicherheit des Energieversorgungssystems eine wesentliche Rolle, um zum Beispiel die Handhabung des Energieversorgungssystems bei seiner Montage und während eines Transports zu vereinfachen sowie einen zuverlässigen und gefahrlosen Betrieb zu gewährleisten.

Die anmeldereigene DE 10 2019 110 177 A1 beschreibt ein mobiles Energieversorgungssystem mit einer verbesserten Leistungsfähigkeit und geringerem Gewicht. Das Energieversorgungssystem weist eine Vielzahl von Batteriemodulen auf, die durch eine zentrale Steuereinheit zeitvariabel in Serie geschaltet werden können, um eine Wechselspannung an einem Ausgang des Versorgungssystems bereitzustellen. Jedes Batteriemodul besitzt einen Eingangs- und einen Ausgangsanschluss, eine Batterieeinheit und eine Schaltung, die die Batterieeinheit wahlweise mit dem Eingangs- und Ausgangsanschluss verbindet. Hierbei kann zwischen die Batterieeinheit und dem Eingangs-/Ausgangsanschluss eine Sicherung vorgesehen sein, die bei zu großem Stromfluss eine Trennung der Batterieeinheit von den Modulanschlüssen bewirkt. Weiterhin kann eine modulinterne Trennvorrichtung vorgesehen sein, um bei Bedarf wahlweise eine Trennung der Batterieeinheit von einem oder mehreren modulinternen Komponenten zu bewirken.

Weiterhin offenbart DE 10 2019 110177 A1 ein Energieversorgungssystem mit mehreren Batteriemodulen, die steuerbar in Serie schaltbar sind, um unterschiedliche Spannungen an einem Stromversorgungsanschluss des Energieversorgungssystems bereitzustellen, und mit einer Steuereinheit zur Ansteuerung der Batteriemodule. Die mehreren Batteriemodule weisen jeweils einen Eingangsanschluss und einen Ausgangsanschluss, eine Batterieeinheit zur Bereitstellung einer Modulspannung, eine Schalteinrichtung zum wahlweisen Schalten der Modulspannung an den Eingangs- und Ausgangsanschluss und einen Steuereingang zum Empfangen eines Steuereingangssignals auf. Die mehreren Batteriemodule sind jeweils eingerichtet, in Reaktion auf ein Abschaltsteuersignal am Steuereingang einen Abschaltzustand einzunehmen, in welchem die Modulspannung vom Eingangs- und Ausgangsanschluss getrennt ist. Die mehreren Batteriemodule weisen jeweils eine Detektionsschaltung zum Erfassen jeweils eines eigenen unzulässigen Betriebszustands auf.

Des Weiteren ist aus US 2017/062793 A ein Energieversorgungssystems bekannt, welches parallel geschaltete Batteriemodule aufweist, die in Serie verschaltet sind. Die Batteriemodule können dabei jeweils von den parallel geschalteten Modulen mittels "contactor" getrennt werden. Die parallel geschalteten Module kommunizieren untereinander mittels eines I2C Busses.

DE 10 2008 021542 A1 offenbart einen Schleifkontakt, welcher Hochvoltkomponenten untereinander verbindet. Die Hochvoltkomponenten werden mittels der Leitungsschleife überwacht und bei geöffneter Leistungsschleife deaktiviert.

Vor diesem Hintergrund liegt der Erfindung die Aufgabe zugrunde, ein verbessertes Energieversorgungssystem und ein Verfahren zum Betrieb eines Energieversorgungssystems bereitzustellen, die sich durch eine hohe elektrische Sicherheit, Zuverlässigkeit, lange Standzeit und Lebensdauer sowie geringe Herstellungskosten auszeichnen.

Diese Aufgabe wird durch ein Energieversorgungssystem mit den Merkmalen des Anspruchs 1 gelöst sowie durch ein Verfahren zum Betrieb eines Energieversorgungssystems mit den Merkmalen des Anspruchs 13. Weitere, besonders vorteilhafte Ausgestaltungen der Erfindung offenbaren die jeweiligen Unteransprüche.

Die Beschreibung charakterisiert und spezifiziert die Erfindung insbesondere im Zusammenhang mit den Figuren zusätzlich.

Es sei ferner angemerkt, dass eine hierin verwendete, zwischen zwei Merkmalen stehende und diese miteinander verknüpfende Konjunktion "und/oder" stets so auszulegen ist, dass in einer ersten Ausgestaltung des erfindungsgemäßen Gegenstands lediglich das erste Merkmal vorhanden sein kann, in einer zweiten Ausgestaltung lediglich das zweite Merkmal vorhanden sein kann und in einer dritten Ausgestaltung sowohl das erste als auch das zweite Merkmal vorhanden sein können.

Ein hierin verwendeter Begriff "etwa" gibt einen Toleranzbereich an, den der auf dem vorliegenden Gebiet tätige Fachmann als üblich ansieht. Insbesondere ist unter dem Begriff "etwa" ein Toleranzbereich der bezogenen Größe von bis maximal +/-20 %, bevorzugt bis maximal +/-10 % anzusehen.

Des Weiteren sind im Sinne der Erfindung hierin verwendete relative Begriffe bezüglich eines Merkmals, zum Beispiel "größer, "kleiner", "höher", "niedriger", "schwerer", "leichter" und dergleichen, stets so auszulegen, dass herstellungs- und/oder durchführungsbedingte Größenabweichungen des betreffenden Merkmals, die innerhalb der für die Fertigung bzw. Durchführung des jeweiligen Merkmals definierten Fertigungs-/Durchführungstoleranzen liegen, nicht von dem jeweiligen relativen Begriff erfasst sind. Mit anderen Worten ist eine Größe eines Merkmals erst dann als im Sinne der Erfindung "größer", "kleiner", "höher", "niedriger", "schwerer", "leichter" und dergleichen anzusehen als eine Größe eines Vergleichsmerkmals, wenn sich die beiden Vergleichsgrößen in ihrem Wert so deutlich voneinander unterscheiden, dass dieser Größenunterschied sicher nicht in den fertigungs-/durchführungsbedingten Toleranzbereich des betreffenden Merkmals fällt, sondern das Ergebnis zielgerichteten Handelns ist.

Erfindungsgemäß weist ein Energieversorgungssystem mehrere Batteriemodule auf, die steuerbar in Serie schaltbar sind, um unterschiedliche (d. h. zeitvariable) Spannungen an einem Stromversorgungsanschluss des Energieversorgungssystems bereitzustellen. Weiter weist das Energieversorgungssystem eine Steuereinheit, die eine zentrale Steuereinheit des Energieversorgungssystems sein kann, zur Ansteuerung der Batteriemodule auf. Jedes Batteriemodul weist einen Eingangsanschluss und einen Ausgangsanschluss, eine Batterieeinheit zur Bereitstellung einer Modulspannung und eine Schalteinrichtung zum wahlweisen Schalten der Modulspannung an den Eingangs- und Ausgangsanschluss auf. Weiterhin weisen die Batteriemodule jeweils einen Steuereingang zum Empfangen eines Steuereingangssignals auf. Die mehreren Batteriemodule sind jeweils eingerichtet, in Reaktion auf ein Abschaltsteuersignal am Steuereingang einen Abschaltzustand einzunehmen, in welchem die Modulspannung vom Eingangs- und Ausgangsanschluss (elektrisch) getrennt ist. Außerdem weisen die mehreren Batteriemodule jeweils eine Detektionsschaltung zum Erfassen jeweils eines eigenen unzulässigen Betriebszustands auf und einen Steuerausgang zum Ausgeben des erfassten unzulässigen Betriebszustands mittels eines Fehlersteuersignals. Das Energieversorgungssystem weist eine Fehlersteuerschaltung auf, die den Steuerausgang wenigstens eines der mehreren Batteriemodule mit dem Steuereingang wenigstens eines anderen der mehreren Batteriemodule verbindet.

Der Erfindung liegt die Erkenntnis zugrunde, dass ein lokal erkannter kritischer Fehler in einem der Batteriemodule nicht immer durch eine lokale Abschaltung des fehlerhaften Batteriemoduls behoben werden kann. Weist beispielsweise die Schalteinrichtung mehrere Schaltelemente wie z. B. MOSFETs zum wahlweisen Schalten der Modulspannung an den Eingangs- und Ausgangsanschluss des Batteriemoduls auf (wobei die Schaltelemente beispielsweise in Form einer Brückenschaltung zusammengeschaltet sein können) und werden die Schaltelemente (bzw. die Brückenschaltung) des fehlerhaften Batteriemoduls nach einem lokal erkannten Fehler in einen hochohmigen Zustand versetzt, während das restliche System weiterläuft, kann die an dem fehlerhaften Batteriemodul aufgrund der Serienschaltung der mehreren Batteriemodule weiterhin an dem Eingangs- und Ausgangsanschluss extern anliegende Spannung zu einem erzwungenen Laden des Batteriemoduls über die MOSFET-Body-Dioden führen. Hierdurch kann sich das eigentliche Problem durch eine hohe Wärmeentwicklung und ggfs. eine Überladung des Batteriemoduls sogar noch verschärfen.

Darüber hinaus kann das lokale Auftreten eines kritischen (unbehandelten) Fehlers im betroffenen Batteriemodul auf das Vorliegen eines übergeordneten Fehlers in der Systemsteuerung hinweisen, so dass auf eine zuverlässige Kommunikation zwischen der Steuereinheit und den Batteriemodulen, um z. B. die restlichen Batteriemodule ordnungsgemäß abzuschalten, nicht vertraut werden kann.

Hier setzt die Erfindung an, indem sie eine dezentrale Detektion und Abschaltung in den mehreren Batteriemodulen ermöglicht. Jedes Batteriemodul ist erfindungsgemäß in die Lage versetzt, wenigstens eines oder auch mehrere der anderen Batteriemodule im Falle eines detektierten eigenen unzulässigen Betriebszustands (d. h. kritischer Fehlerzustand) zuverlässig abzuschalten.

Kritische Betriebszustände, die vom Batteriemodul beispielsweise mittels geeigneter Sensoren und/oder Detektionsschaltungen erfasst werden können, können (ohne zwingende Beschränkung hierauf) z. B. sein:
- Zu hohe/niedrige Modulspannung und/oder Zellspannung einzelner Batteriezellen der Batterieeinheit
- Zu hohe/niedrige Modul- und/oder Zelltemperatur beim Laden / Entladen
- Zu großer Unterschied der Zellspannungen zwischen einzelnen Batteriezellen (De-Balancing) der Batterieeinheit
- Sonstige Messungen, die auf einen kritischen Fehler von Batteriezellen des Batteriemoduls/Batterieeinheit hinweisen
- Sonstige Messungen, die auf einen kritischen Schaltungsfehler im Batteriemodul hinweisen

Die Fehlerdetektions- und Abschaltfunktion auf Modulebene stellt neben einer möglicherweise ebenfalls vorhandenen zentralen Überwachung durch die Steuereinheit des Energieversorgungssystems eine deutliche Erhöhung der elektrischen Sicherheit des Systems bereit. Auf diese Weise kann auf einfache Weise eine vollständig redundante, zuverlässige Fehlerabschaltung des gesamten Energieversorgungssystems im Falle eines lediglich in einem einzigen Batteriemodul erfassten kritischen Betriebszustands realisiert werden. In dem Fall, in dem die Steuereinheit des Energieversorgungssystems den kritischen Modulzustand nicht erkennen kann oder nicht (mehr) in der Lage sein sollte, die anderen Batteriemodule sicher abzuschalten, ist die vollständige elektrische Sicherheit bei dem erfindungsgemäßen Energieversorgungssystem dennoch gewährleistet.

Es ist zu verstehen, dass die Fehlersteuerschaltung in einer einfachsten Ausgestaltung lediglich passive Komponenten, z. B. Verbindungsleitungen, aufweisen kann.

Darüber hinaus kann sie auch aktive Elemente aufweisen, z. B. eine prozessorgesteuerte Fehlersteuereinheit.

Als unterschiedliche Spannung am Stromversorgungsanschluss ist eine über die Zeit variierende elektrische Spannung am Stromversorgungsanschluss zu verstehen. Unterschiedliche Spannungen am Stromversorgungsanschluss können erzeugt werden, indem zum Beispiel eine wechselnde Anzahl an Batteriemodulen (ggfs. zusätzlich mit wechselnder Polarität) gleichzeitig mit dem Stromversorgungsanschluss wirksam verbunden werden, um eine Wechselspannung (z. B. 230 VAC) zu erzeugen.

Auch der Wechsel zwischen unterschiedlichen Batteriemodulen unter Beibehaltung derselben Gesamtzahl gleichzeitig am Stromversorgungsanschluss aktiver Batteriemodule, um zum Beispiel eine Gleichspannung bereitzustellen, kann im erfindungsgemäßen Sinn zu einer Veränderung der Spannung am Stromversorgungsanschluss führen. Ein solcher Wechsel kann beispielsweise stattfinden, um veränderliche Modulspannungen abhängig vom augenblicklichen Ladezustand (SoC) der jeweiligen Batteriemodule auszugleichen. Selbstverständlich kann eine am Stromversorgungsanschluss bereitgestellte Gleichspannung auch durch Änderung der gleichzeitig mit dem Stromversorgungsanschluss aktiv verbundenen Batteriemodule erfolgen, um einem angeschlossenen Verbraucher zum Beispiel zeitlich variierende Gleichspannungsniveaus bereitzustellen.

Der Stromversorgungsanschluss des Energieversorgungssystems kann als Ausgangsanschluss dienen, an den elektrische Verbraucher angeschlossen und für ihren Betrieb mit elektrischer Energie aus den Batteriemodulen versorgt werden können. Zusätzlich kann der Stromversorgungsanschluss ggfs. auch als Eingangsanschluss dienen, an den eine systemexterne elektrische Energiequelle, zum Beispiel ein herkömmliches (Niederspannungs-) Stromversorgungsnetz, angeschlossen werden kann, um die Batteriemodule zu laden, sofern die Batterieeinheit eine wiederaufladbare Batterieeinheit ist. Es ist zu verstehen, dass ggfs. auch ein separater Ladeanschluss zusätzlich zum Stromversorgungsanschluss am Energieversorgungssystem bereitgestellt sein kann, um ein Laden der Batterieeinheiten mittels der systemexternen Energiequelle zu bewirken.

Die Schalteinrichtung kann mehrere, vorzugsweise leistungselektronische, Schaltelemente aufweisen kann. Die Schaltelemente können ausgelegt sein, die Modulspannung zur Energiebereitstellung wahlweise an den Eingangs- und Ausgangsanschluss zu schalten.

Als leistungselektronische Schaltelemente sind insbesondere solche elektronischen Bauelemente zu verstehen, die eingerichtet sind, elektrische Energie umzuformen, zum Beispiel gleich- oder wechselzurichten, und/oder einem elektrischen Verbraucher wahlweise elektrische Energie zuzuführen, das heißt den Verbraucher mit einer Energiequelle (z. B. Batterieeinheit des Batteriemoduls) elektrisch zu verbinden (Zuschalten) oder von dieser zu trennen (Abschalten).

Um die Modulspannung der Batterieeinheit wahlweise an den Eingangs- und Ausgangsanschluss des jeweiligen Batteriemoduls zu schalten, können die Schaltelemente beispielsweise in einer Brückenschaltung verschaltet sein, die zwischen Eingangsanschluss und Ausgangsanschluss des Batteriemoduls vorgesehen ist und eingerichtet ist, entweder die Batterieeinheit mit dem Eingangs- und Ausgangsanschluss zu verbinden oder den Eingangsanschluss mit dem Ausgangsanschluss unter Überbrückung der Batterieeinheit zu verbinden. Die Verbindung der Batterieeinheit mit dem Eingangs- und Ausgangsanschluss des Batteriemoduls kann hierbei nur mit einer einzigen vorbestimmten Polung (z. B. positive oder negative Polarität) oder wahlweise mit einer ersten Polung (z. B. positive Polarität) und einer zweiten, zu ersten invertierten Polung (z. B. negative Polarität) erfolgen. Die Erfindung ist jedoch nicht auf eine solche Brückenschaltung beschränkt. Andere Schaltungsanordnungen der Schaltelemente zur wahlweisen Verbindung der Batterieeinheit mit dem Eingangs- und Ausgangsanschluss des Batteriemoduls können ebenfalls vorgesehen sein.

Gemäß einer vorteilhaften Ausgestaltung der Erfindung verbindet die Fehlersteuerschaltung den Steuerausgang jedes der mehreren Batteriemodule jeweils mit dem Steuereingang lediglich eines einzigen anderen der Batteriemodule. Hierdurch lässt sich in einfacher Weise eine sogenannte "Daisy Chain" der Batteriemodule verwirklichen, bei der die mehreren Batteriemodule über die Fehlersteuerschaltung in Serie miteinander verbunden sind. Das Batteriemodul, das einen eigenen kritischen Betriebszustand detektiert kann somit seinen Nachbarn über das Fehlersteuersignal abschalten, dieser seinen Nachbarn usw., bis alle Batteriemodule der Reihe nach abgeschaltet und die elektrische Sicherheit des Energieversorgungssystems gewährleistet sind.

Nach einer alternativen Weiterbildung des Erfindungsgegenstands kann die Fehlersteuerschaltung den Steuerausgang jedes der mehreren Batteriemodule mit dem Steuereingang jedes anderen der Batteriemodule verbinden. Dies kann zum Beispiel durch eine stern- oder busförmige Verschaltung der Batteriemodule untereinander realisiert sein. Das Fehlersteuersignal eines einzigen Batteriemoduls kann somit alle anderen Batteriemodule parallel abschalten, wodurch der Zustand hoher elektrischer Sicherheit des Energieversorgungssystems im Fehlerfall noch schneller erreicht werden kann.

Die Fehlersteuerschaltung kann gemäß einer vorteilhaften Weiterbildung auch eine separate Fehlersteuereinheit aufweisen, die beispielsweise als prozessor- oder transistorgesteuerte Steuereinheit ausgebildet sein kann. Jedenfalls weist die Fehlersteuereinheit einen Fehlersteuereingang, an den der Steuerausgang wenigstens eines der mehreren Batteriemodule geführt ist, und einen Fehlersteuerausgang auf, der an den Steuereingang wenigstens eines der mehreren Batteriemodule geführt ist. Die Fehlersteuereinheit ist eingerichtet, in Reaktion auf das Vorliegen des Fehlersteuersignals am Fehlersteuereingang das Abschaltsteuersignal am Fehlersteuerausgang zu erzeugen. Es versteht sich, dass die Steuerausgänge aller Batteriemodule an den Fehlersteuereingang der Fehlersteuereinheit angeschlossen sein können und/oder der Fehlersteuerausgang der Fehlersteuereinheit mit den Steuereingängen aller Batteriemodule verbunden sein kann. Die Fehlersteuereinheit fungiert als unabhängige, zentrale Einheit, die das am Fehlersteuereingang anliegende Signal auswertet und im Fehlerfall das bzw. die Batteriemodule abschaltet.

Die Fehlersteuereinheit kann weiterhin eingerichtet sein, bei Vorliegen eines erkannten Fehlerzustands weitere Komponenten des Energieversorgungssystems zu deaktivieren. Zum Beispiel kann der Stromversorgungsanschluss ein Schaltmittel aufweisen, mit dem das Energieversorgungssystems von einem angeschlossenen Verbraucher (d. h. beim Entladen) bzw. einer angeschlossenen Energiequelle (d. h. beim Laden) bedarfsweise, insbesondere im Fehlerfall, getrennt werden kann, um die elektrische Sicherheit des Energieversorgungssystems noch weiter zu erhöhen. Insbesondere bei einem Ladevorgang kann die am Stromversorgungsanschluss anliegende Ladespannung von allen internen elektrischen Komponenten des Energieversorgungssystems getrennt werden.

Die Fehlersteuereinheit stellt eine aktive Komponente der Fehlersteuerschaltung dar, da sie ausgebildet ist, den Fehlersteuereingang auf das Vorhandensein eines Fehlersteuersignals zu überwachen und in Reaktion auf das detektierte Fehlersteuersignal das Abschaltsteuersignal am Fehlersteuerausgang zu erzeugen. Sie kann zum Beispiel einen Mikroprozessor, Mikrocontroller und dergleichen aufweisen oder durch eine Transistor- oder Logikgatterschaltung gebildet sein, ohne jedoch zwingend hierauf beschränkt zu sein.

Eine weitere vorteilhafte Ausgestaltung der Erfindung sieht vor, dass die mehreren Batteriemodule jeweils einen Steueranschluss aufweisen, der sowohl den Steuereingang als auch den Steuerausgang ausbildet, wobei das Abschaltsteuersignal und das Fehlersteuersignal über den Steueranschluss als bidirektionales Steuersignal geführt sind. Auf diese Weise lässt sich die Anzahl an den Batteriemodulen bereitzustellender Anschlüsse sowie die Anzahl notwendiger Signalleitungen erheblich reduzieren (d. h. wenigstens halbieren). Das Energieversorgungssystem kann auf diese Weise kostengünstiger hergestellt werden und weist ein einfacheres Schaltungsdesign auf. Potenzielle Fehlerquellen im Energieversorgungssystem werden hierdurch gleichfalls reduziert, was die Zuverlässigkeit sowie die Standzeit und Lebensdauer des Energieversorgungssystems weiter erhöht.

Erfindungsgemäß weisen die mehreren Batteriemodule vorteilhaft jeweils wenigstens einen Durchschleifkontakt auf, der einen Eingangs- und einen Ausgangskontakt aufweist, die modulseitig elektrisch leitend miteinander verbunden sind. In diesem Fall ist die Fehlersteuerschaltung ausgebildet, den Steuerausgang und/oder Steuereingang wenigstens eines der Batteriemodule mit dem Durchschleifkontakt wenigstens eines anderen der Batteriemodule in Reihe zu schalten. Mit anderen Worten wird eine Verschaltung zur Übertragung des Fehlersteuersignals und/oder Abschaltsteuersignals verwirklicht, die den Durchschleifkontakt wenigstens eines der Batteriemodule, bevorzugt die Durchschleifkontakte aller Batteriemodule, einbezieht.

Der Eingangs- und Ausgangskontakt des Durchschleifkontakts zum Anschluss der Steuersignalübertragungsleitung kann hierbei vorteilhaft in räumlicher Nähe, z. B. unmittelbar benachbart, zum Anschluss an den Steuereingang und/oder Steuerausgang des jeweiligen Batteriemoduls angeordnet sein. Beispielsweise können die Anschlüsse für den Eingang-/Ausgangskontakt sowie für den Steuereingang und/oder Steueraufgang durch individuelle, voneinander unabhängige elektrische Verbindungen (z. B. Steckverbindung) realisiert sein. Alternativ können diese auch als individuelle, jedoch gemeinsam in einem Kontaktierungsgehäuse (z. B. Steckergehäuse) aufgenommen sein. Es hat sich gezeigt, dass sich in einem Fehlerfall ein alle Kontakte aufnehmender Steckverbinder i. d. R. vollständig löst, zumindest sich aber nahe beieinander liegende Kontakte häufig gemeinsam lösen, wodurch die über den Durchschleifkontakt bewirkte Durchleitung des entsprechenden Steuersignals ebenfalls unterbrochen wird. Dementsprechend kann ein Fehler durch Ablösen einer Steckverbindung von einem der Batteriemodule erkannt werden und infolgedessen können alle anderen Batteriemodule abgeschaltet werden, um einen elektrisch sicheren Zustand des Energieversorgungssystems herzustellen.

Gemäß einer vorteilhaften weiteren Ausgestaltung des Erfindungsgegenstands ist das den Abschaltzustand der mehreren Batteriemodule bewirkende Abschaltsteuersignal und/oder das den unzulässigen Betriebszustand der mehreren Batteriemodule repräsentierende Fehlersteuersignal ein LOW-aktives Steuersignal. Das heißt, ein digitaler LOW-Pegel signalisiert das Abschalten (Abschaltsteuersignal) bzw. den Fehlerfall (Fehlersteuersignal). In allen anderen Fällen nimmt das entsprechende Steuersignal einen HIGH-Pegel ein. Beispielsweise kann bei Vorhandensein einer unabhängigen Fehlersteuereinheit deren Ausfall automatisch anhand des Ausbleibens des aktiven HIGH-Signal erkannt werden, woraufhin sich die Batteriemodule in der hierin offenbarten Weise deaktivieren.

Bevorzugt kann der Steuerausgang der mehreren Batteriemodule bei einer vorteilhaften Weiterbildung des Erfindungsgegenstands als sogenannter Open-Drain-Ausgang (z. B. Feldeffekttransistor wie MOSFET) oder Open-Collector-Ausgang (z. B. Bipolartransistor) ausgebildet sein. Beide Begriffe werden hierin ohne Beschränkung auf einen jeweiligen Transistortyp synonym verwendet. Beispielsweise kann bei Verwendung LOW-aktiver Steuersignale der Open-Drain-Ausgang aktiv gegen Massepotential (GND) geschaltet werden, wohingegen das HIGH-Signal bei offenem Drain/Kollektor automatisch z. B. mittels sogenannter Pull-up-Widerstände auf der entsprechenden Signalleitung erzeugt werden kann.

Eine noch weitere vorteilhafte Ausgestaltung der Erfindung sieht vor, dass die Fehlersteuerschaltung einen die mehreren Batteriemodule miteinander verbindenden Datenkommunikationsbus mit wenigstens einer Datenübertragungsleitung aufweist, wobei der Steuerausgang und/oder der Steuereingang der mehreren Batteriemodule mit der wenigstens einen Datenübertragungsleitung verbunden ist/sind. Zum Beispiel kann der Datenbus ein an sich wohl bekannter CAN-Bus sein. Das Protokoll des Datenbusses kann hierbei vorteilhaft für einen ordnungsgemäßen Betrieb ein (dauerhaftes bzw. langandauerndes) LOW-Signal verbieten, so dass der Fehlerfall in einfacher Weise über den an sich auf herkömmliche Weise nutzbaren Datenbus durch ein LOW-aktives Signal eindeutig für alle Busteilnehmer (d. h. an den Bus angeschlossene Batteriemodule) signalisiert werden kann. Mit anderen Worten können die Batteriemodule die Datenbusleitung (länger als das Busprotokoll zulässt) auf Massepotential (GND) ziehen, um einen Fehler anzuzeigen (Steuerausgang). Durch eine redundante Schaltung (z. B. ein Tiefpass/Zeitglied) kann aber auch im Batteriemodul erkannt werden, dass der Datenbus unzulässig auf GND gezogen wurde und dies als Abschaltsignal behandeln (Steuereingang).

Der Fehlerfall bzw. das Abschaltsignal kann selbstverständlich auch auf herkömmliche Weise über den Datenbus an alle Busteilnehmer kommuniziert werden, z. B. als ordnungsgemäßes Datenpaket gemäß einem für den jeweiligen Datenbus geltenden Kommunikationsprotokoll. Zum Beispiel kann das Fehlersteuersignal als Nachrichtenpaket über den Datenbus an eine Steuereinheit (z. B. Fehlersteuereinheit und/oder zentrale Steuereinheit des Energieversorgungssystems) übertragen werden, woraufhin diese die Batteriemodule auf eine der hierin offenbarten Weisen abschaltet.

Der Datenbus kann ein für die herkömmliche Kommunikation zwischen Komponenten des Energieversorgungssystems genutzter Datenbus sein. Der Datenbus kann der einzige Datenbus des Energieversorgungssystems sein, der in diesem Fall zwei Funktionen bereitstellt, nämlich den herkömmlichen Informationsaustausch zwischen verschiedenen Komponenten des Energieversorgungssystems (z. B. zentrale Steuereinheit, Batteriemodule, ggfs. Fehlersteuereinheit etc.) sowie die Fehler- bzw. Abschaltkommunikation der Batteriemodule. Der Datenbus zur Übertragung des Fehlerzustands bzw. des Abschaltsteuersignals kann auch ein zu einem anderen Kommunikationsbus redundanter Datenbus sein, der lediglich für die spezielle Aufgabe der Fehlerkommunikation/Fehlerabschaltung vorgesehen sein kann.

Weiterhin können die mehreren Batteriemodule jeweils eine Isolationsvorrichtung aufweisen, die eine galvanische Trennung zwischen der Detektionsschaltung und der Fehlersteuerschaltung ausbildet, um die elektrische Sicherheit zwischen den Batteriemodulen und/oder weiteren Komponenten des Energieversorgungssystems (z. B. zentrale Steuereinheit) weiter zu erhöhen. Die galvanische Trennung kann zum Beispiel mittels einer induktiven Kopplungseinrichtung oder mittels Optokoppler erfolgen.

Eine noch andere vorteilhafte Ausgestaltung der Erfindung sieht ein mit der Fehlersteuerschaltung verbundenes Schaltmittel vor, das eingerichtet ist, die mehreren Batteriemodule bei Vorliegen des Abschaltsteuersignals vom Stromversorgungsanschluss des Energieversorgungssystems zu trennen. Auf diese Weise kann ein an das Energieversorgungssystem angeschlossener Verbraucher bzw. eine angeschlossene Energiequelle zum Laden der Batteriemodule sicher von allen elektrischen Komponenten des Systems getrennt werden.

Der unzulässigen Betriebszustand der Batteriemodule kann vorliegen bei Über-/Unterschreiten eines vorbestimmten maximalen bzw. minimalen Spannungsschwellenwerts der Modulspannung und/oder von Zellspannungen mehrerer Batteriezellen der Batterieeinheit, einer vorbestimmten Spannungsdifferenz zwischen unterschiedlichen Batteriezellen der Batterieeinheit, eines vorbestimmten maximalen bzw. minimalen Stromschwellenwerts am Stromversorgungsanschluss des Energieversorgungssystems und/oder innerhalb des Energieversorgungssystems (z. B. zwischen Batteriemodulen), eines vorbestimmten maximalen bzw. minimalen Temperaturschwellenwerts der mehreren Batteriemodule bei einem Lade- und/oder Entladevorgang und dergleichen.

Gemäß einer bevorzugten Weiterbildung des Erfindungsgegenstands ist das Energieversorgungssystem als mobiles, insbesondere tragbares, Energieversorgungssystems zur mobilen Stromversorgung eines elektrischen Verbrauchers ausgebildet. Das Energieversorgungssystem weist als tragbares Versorgungssystem vorzugsweise eine Masse von weniger als 25 Kilogramm auf, insbesondere weniger als 20-15 kg. Seine Größe ist dabei so beschränkt, dass es für eine Person handhabbar ist. Beispielsweise kann das Energieversorgungssystem vorteilhafterweise wie ein Rucksack getragen werden, ohne jedoch hierauf zwingend beschränkt zu sein.

Mögliche Schaltelemente der Steuereinheit können bevorzugt MOSFET-Schalter sein, besonders bevorzugt N-Kanal MOSFET-Schalter, mit einer Durchbruchspannung zwischen etwa 30 V bis etwa 100 V. Dies führt zu einer möglichst geringen Anzahl an einzusetzenden Schaltelementen, einer geringeren Baugröße des Energieversorgungssystems, geringeren thermischen Verlusten der Schaltelemente, höheren Effizienz bei der Spannungswandlung bzw. beim Schalten der Spannungen. Hierdurch kann die in den Batteriemodulen bzw. Batterieeinheiten gespeicherte elektrische Energie noch besser genutzt werden, was zu einer längeren Betriebsdauer/Standzeit führt. Dies ist insbesondere bei mobilen Anwendungen vorteilhaft, da die mitgeführte Energiemenge begrenzt ist und die Energiedichte der Batterieeinheiten direkt das Gewicht des Energieversorgungssystems beeinflusst.

Jede Batterieeinheit kann jeweils mehrere Batteriezellen aufweisen. Bevorzugt verwendete Batteriezellen sind z. B. Lithium-Ionen-Zellen, wobei die Erfindung nicht zwingend auf diesen Zelltyp beschränkt ist. Besonders vorteilhaft weist jede Batterieeinheit maximal so viele Batteriezellen auf, dass eine Gesamtmasse der Batterieeinheit höchstens 1 kg beträgt. Hierdurch lässt sich die Leistungsfähigkeit des Energieversorgungssystems maximieren, wobei die Mobilität/Tragbarkeit des Systems erhalten bleibt.

Weiterhin kann die Batterieeinheit maximal 14 Batteriezellen aufweisen, wobei die Anzahl der Batteriezellen bevorzugt auf maximal 6 begrenzt wird. Dies ermöglicht es, Schaltelemente (z. B. Halbleiterschalter wie MOSFET) mit einer niedrigeren Sperrspannung zu verwenden. Die Sperrspannung der Schaltelemente muss nicht auf die Sperrspannung der erzeugten Systemausgangsspannung ausgelegt sein, sondern lediglich auf die maximale Spannung eines Batteriemoduls. Für ein Batteriemodul mit beispielsweise sechs Lithium-Ionen Zellen in Serienschaltung beträgt die maximale Modulspannung beispielsweise 6 * 4,2 V = 25,2 V. Es kann also z. B. ein Halbleiterschalter mit einer Sperrspannung von beispielsweise 40 V verwendet werden. Ein solches Bauteil hat bei gleicher Baugröße z. B. um einen Faktor 100 geringere statische Verluste als ein Halbleiterschalter mit 650 V Sperrspannung. Demzufolge ist die lokale Wärmeentwicklung um einen Faktor 100 geringer.

Dies ergibt bei einem Halbleiterschalter mit 1 mΩ Durchgangswiderstand im geschlossenen Zustand bei einer Stromstärke von 16 A nur etwa 0,25 Watt Wärmeentwicklung pro Schaltelement.

Weiterhin kann das Batteriemodul ein die Batterieeinheit und Schalteinrichtung bzw. die Schaltelemente aufnehmendes Gehäuse aufweisen. Mit anderen Worten bilden die Schaltelemente und die Batterieeinheit in dieser Ausgestaltung eine bauliche Einheit, was insbesondere Vorteile in Bezug auf eine kompakte Baugröße und ein vereinfachtes Verlustwärmemanagement mit sich bringt.

Ist eine ausreichend große Wärmeabfuhr mittels passiver Kühlung möglich, kann das Gehäuse auch hermetisch geschlossen sein, da keine Öffnungen zum Beispiel für einen Luftaustausch mit der Umgebung benötigt werden. Dies führt zu einer deutlich verringerten Anfälligkeit gegen Verschmutzung und Feuchtigkeit, so dass die Zuverlässigkeit weiter erhöht und der mögliche Einsatzbereich des Energieversorgungssystems weiter vergrößert wird. Beispielsweise ist eine uneingeschränkte Verwendung in Außenbereichen und sogar unter Wasser (d. h. wasserdichtes Gehäuse) möglich.

Gemäß einem weiteren Aspekt der Erfindung weist ein Verfahren zum Betrieb eines Energieversorgungssystems, zum Beispiel ein Energieversorgungssystem nach einer der hierin offenbarten Ausgestaltungen, die Schritte auf:
- Bereitstellen mehrerer, in Serie steuerbar schaltbare Batteriemodule,
- Ansteuern der Batteriemodule, um unterschiedliche Spannungen an einem Stromversorgungsanschluss des Energieversorgungssystems bereitzustellen, und
- wahlweises Schalten einer von jeweils einer Batterieeinheit der mehreren Batteriemodule bereitgestellten Modulspannung an einen Eingangs- und Ausgangsanschluss des jeweiligen Batteriemoduls mittels einer Schalteinrichtung, um elektrische Energie am Eingangs- und Ausgangsanschluss bereitzustellen,
- Empfangen eines Steuereingangssignals über einen Steuereingang des jeweiligen Batteriemoduls, wobei die mehreren Batteriemodule jeweils in Reaktion auf ein Abschaltsteuersignal am Steuereingang in einen Abschaltzustand gebracht werden, in welchem die Modulspannung vom Eingangs- und Ausgangsanschluss getrennt wird,
wobei ein unzulässiger Betriebszustand jeweils von den mehreren Batteriemodulen mittels einer jeweiligen Detektionsschaltung erfasst wird und der erfasste unzulässige Betriebszustands mittels eines Fehlersteuersignals an einem Steuerausgang des jeweiligen Batteriemoduls ausgegeben wird, wobei das Fehlersteuersignal vom Steuerausgang wenigstens eines der mehreren Batteriemodule an den Steuereingang wenigstens eines anderen der mehreren Batteriemodule mittels einer Fehlersteuerschaltung übertragen wird.

Bezüglich verfahrensbezogener Begriffsdefinitionen sowie der Wirkungen und Vorteile verfahrensgemäßer Merkmale kann vollumfänglich auf die Offenbarung sinngemäßer Definitionen, Wirkungen und Vorteile des erfindungsgemäßen Energieversorgungssystems zurückgegriffen werden. Dementsprechend können Offenbarungen bezüglich des erfindungsgemäßen Energieversorgungssystems in sinngemäßer Weise ebenso zur Definition des erfindungsgemäßen Verfahrens herangezogen werden und umgekehrt, sofern dies nicht ausdrücklich ausgeschlossen ist. Auf eine Wiederholung von Erläuterungen sinngemäß gleicher Merkmale, deren Wirkungen und Vorteile kann zugunsten einer kompakteren Beschreibung verzichtet werden, ohne dass derartige Auslassungen als Einschränkung auszulegen wären.

Weitere Merkmale und Vorteile der Erfindung ergeben sich aus der folgenden Beschreibung nicht einschränkend zu verstehender Ausführungsbeispiele der Erfindung, die im Folgenden unter Bezugnahme auf die Zeichnung näher erläutert wird. In dieser Zeichnung zeigen schematisch:
- Fig. 1: ein Funktionsdiagramm eines Ausführungsbeispiels eines Energieversorgungssystems gemäß der Erfindung,
- Fig. 2: ein Funktionsdiagramm eines Batteriemoduls des Energieversorgungssystems aus Fig. 1,
- Fig. 3: eine detaillierte Ansicht des Energieversorgungssystems aus Fig. 1,
- Fig. 4: ein Funktionsdiagramm eines weiteren Ausführungsbeispiels eines Energieversorgungssystems gemäß der Erfindung,
- Fig. 5: ein Funktionsdiagramm eines noch weiteren Ausführungsbeispiels eines Energieversorgungssystems gemäß der Erfindung und
- Fig. 6: eine detaillierte Ansicht eines Teils einer beispielhaften Fehlersteuerschaltung eines noch weiteren Ausführungsbeispiels eines Energieversorgungssystems gemäß der Erfindung.

In den unterschiedlichen Figuren sind hinsichtlich ihrer Funktion gleichwertige Teile stets mit denselben Bezugszeichen versehen, so dass diese in der Regel auch nur einmal beschrieben werden.

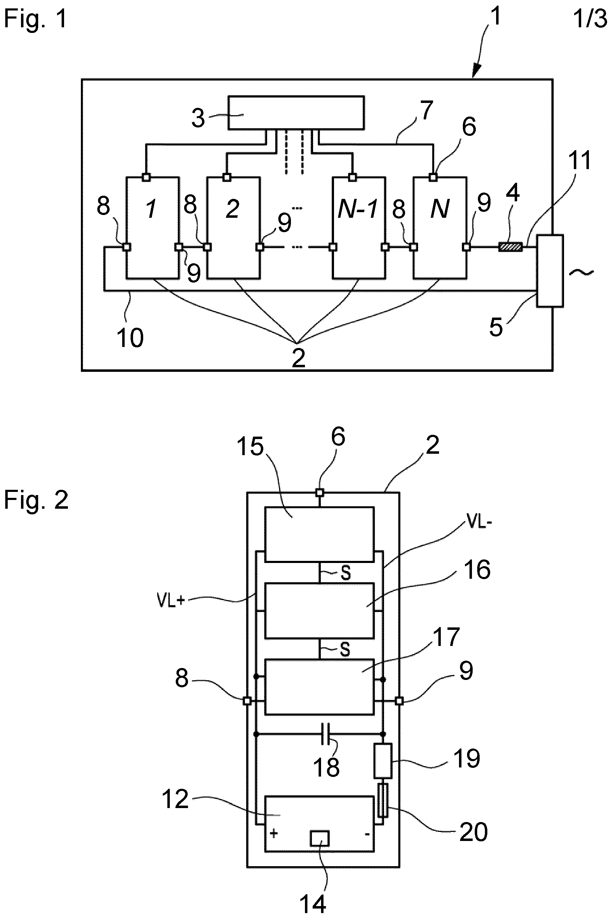

Fig. 1 stellt ein Funktionsdiagramm eines Ausführungsbeispiels eines Energieversorgungssystems 1 gemäß der Erfindung dar. Dieses Energieversorgungssystem 1 ist vorliegend als mobile Einheit, insbesondere als tragbares Energieversorgungssystem, ausgebildet, d. h. mit einem Gewicht und einer Größe, die für eine Person handhabbar ist. Das Gewicht des Energieversorgungssystems liegt unter 25 Kilogramm und die Größe ist so bemessen, dass das Energieversorgungssystem zum Beispiel als Rucksack getragen werden kann. Es ist zu verstehen, dass die Erfindung jedoch nicht zwingend auf eine mobile bzw. tragbare Ausgestaltung beschränkt ist.

Das Energieversorgungssystem 1 weist in Fig. 1 eine Anzahl N Batteriemodule 2 auf (hierin nachstehend auch als Batteriemodule 2.1, 2.2, ..., 2.N bezeichnet), die steuerbar in Serie schaltbar sind. Die Steuerung der einzelnen Batteriemodule 2 kann über eine Steuereinheit 3 erfolgen, die vorliegend, jedoch ohne Beschränkung, eine zentrale Steuereinheit des Energieversorgungssystems 1 sein kann. Die von den in Serie geschalteten Batteriemodulen 2 abgegebene Gesamtspannung kann beispielsweise über eine Glättungsdrossel 4 geglättet werden und liegt an einem Stromversorgungsanschluss 5, der zum Beispiel als Steckvorrichtung ausgebildet sein kann, an. Bei der Steckvorrichtung kann es sich um einen normierten Steckanschluss für beispielsweise 230 V Wechselspannungsgeräte handeln, ohne jedoch zwingend hierauf beschränkt zu sein.

Wie Fig. 1 weiter zu entnehmen ist, weist vorliegend jedes der N Batteriemodule 2 einen Steueranschluss 6 auf, über den die Steuereinrichtung 3 ein Steuersignal über eine Steuerleitung 7 übermitteln kann. Ferner weist jedes Batteriemodul 2 einen Moduleingang 8 und einen Modulausgang 9 auf. Es sei angemerkt, dass "Eingang" und "Ausgang" beliebig benannt sind. Insbesondere bei steuerbarer Polarität der Batteriemodule 2 können "Eingang" und "Ausgang" funktional nicht voneinander abgegrenzt werden. So können durch geeignete Ansteuerung auch zwei Eingänge 8 oder Ausgänge 9 in der Serienschaltung miteinander verbunden werden.

Die N Batteriemodule sind vorliegend so angeordnet, dass der Modulausgang 9 eines Batteriemoduls 2 mit dem Moduleingang 8 des nachfolgenden Batteriemoduls 2 elektrisch verbunden ist. Der Moduleingang 8 des ersten Batteriemoduls 2.1 ist über einen Leitungsabschnitt 10 mit dem Stromversorgungsanschluss 5 elektrisch verbunden, und der Modulausgang 9 des letzten Batteriemoduls 2.N ist über die Glättungsdrossel 4 und einen weiteren Leitungsabschnitt 11 mit dem Stromversorgungsanschluss 5 elektrisch verbunden, so dass die abgegebene Ausgangsspannung des Energieversorgungssystems 1 zwischen Moduleingang 8 des ersten Batteriemoduls 2.1 und dem Modulausgang 9 des letzten Batteriemoduls 2.N anliegt.

Um unterschiedliche Spannungen an dem Stromversorgungsanschluss 5 des Energieversorgungssystems 1 bereitzustellen, zum Beispiel eine im Wesentlichen sinusförmige Wechselspannung am Ausgang 5 zu erzeugen, werden die Batteriemodule 2 von der Steuereinheit 3 periodisch so gesteuert, dass wahlweise keines, eines oder mehrere Batteriemodule 2 wirksam mit dem Stromversorgungsanschluss 5 verbunden sind, um elektrische Energie am Systemausgang 5 bereitzustellen.

Die Batteriemodule 2 können hierzu beispielsweise in einer so genannten Brückenschaltung verschaltet sein, die zwischen Eingangsanschluss und Ausgangsanschluss des Batteriemoduls vorgesehen ist und eingerichtet ist, entweder die Batterieeinheit 12 mit dem Eingangs- und Ausgangsanschluss 8, 9 zu verbinden (Batteriemodus) oder den Eingangsanschluss 8 mit dem Ausgangsanschluss 9 unter Überbrückung der jeweiligen Batterieeinheit 12 zu verbinden (Überbrückungsmodus). Die Erfindung ist jedoch nicht zwingend auf eine Anordnung von Schaltelementen in der vorbeschriebenen Brückenschaltung beschränkt. Andere Schaltungsanordnungen können verwendet werden, die die Modulspannung wahlweise an den Eingang- und Ausgangsanschluss 8, 9 schalten können.

Jedenfalls können die einzelnen Batteriemodule 2 gesteuert von der Steuereinheit 3 periodisch vorliegend von einem Batteriemodus zu einem Überbrückungsmodus und umgekehrt wechseln. Im Batteriemodus liegt zwischen dem Moduleingang 8 und dem Modulausgang 9 eines Batteriemoduls 2 die Modulspannung einer Batterieeinheit 12 (Fig. 2) des Batteriemoduls 2 an. Im Überbrückungsmodus hingegen sind Moduleingang 8 und Modulausgang 9 elektrisch miteinander verbunden, so dass keine Modulspannung zwischen diesen Punkten anliegt.

Durch sukzessives Schalten der Batteriemodule 2 aus dem Überbrückungsmodus in den Batteriemodus lässt sich folglich die Ausgangsspannung am Stromversorgungsanschluss 5 stufenweise um die Modulspannung eines Batteriemoduls 2 erhöhen. In gleichem Maße lässt sich durch sukzessives Zurückschalten in den Überbrückungsmodus die Ausgangsspannung wieder schrittweise reduzieren. Die möglichen Spannungen am Ausgang liegen folglich zwischen 0 V und N mal die Modulspannung eines Batteriemoduls 2.

Durch Glätten, sofern erforderlich, dieses stufenförmigen Spannungsverlaufs lässt sich ein im Wesentlichen sinusförmiger Spannungsverlauf am Stromversorgungsanschluss 5 bereitstellen.

Es sei erwähnt, dass auch mehrere der N Batteriemodule 2 gleichzeitig zwischen Überbrückungsmodus und Batteriemodus hin und her geschaltet werden können. Darüber hinaus sei angemerkt, dass vorstehend die Erzeugung lediglich einer Halbwelle beschrieben wurde. Die andere Halbwelle kann in gleicher Weise erzeugt werden, wobei zum Beispiel eine Umpolung der Batteriemodule 2 an ihren jeweiligen Eingangs- und Ausgangsanschlüssen 8, 9 erfolgen kann.

Fig. 2 stellt in einem Funktionsdiagramm den grundsätzlichen Aufbau eines Batteriemoduls 2 des Energieversorgungssystems 1 aus Fig. 1 dar. Wie zu erkennen ist, weist das Batteriemodul 2 eine Batterieeinheit 12 auf, die wiederum eine oder mehrere Batteriezellen (nicht dargestellt), vorzugsweise wiederaufladbare Batteriezellen wie beispielsweise Lithium-Ionen-Zellen, aufweist. Weiterhin kann die Batterieeinheit 12 eine Batteriezellenüberwachungseinheit 14 aufweisen. Die Batteriezellenüberwachungseinheit 14 überwacht die Zellspannungen der einzelnen Batteriezellen und kann somit als eine mögliche Detektionsschaltung im Sinne der Erfindung aufgefasst werden, die einen unzulässigen Betriebszustands des entsprechenden Batteriemoduls 2 detektieren kann, z. B. eine unzulässig hohe/niedrige Modulspannung und/oder Zellspannung, eine unzulässig hohe/niedrige Modul- und/oder Zelltemperatur beim Laden / Entladen der Batteriezellen, einen unzulässig großen Unterschied der Zellspannungen zwischen einzelnen Batteriezellen der Batterieeinheit 12 (d. h. De-Balancing).

Wie Fig. 2 weiter zu entnehmen ist, weist das Batteriemodul 2 vorliegend eine Isolationsvorrichtung 15 auf, eine Steuereinrichtung 16, eine Schalteinrichtung 17, die mehrere Schaltelemente (nicht dargestellt) aufweisen kann, sowie einen Kondensator 18, die parallel zueinander und zu der Batterieeinheit 12 angeordnet sind und über zwei Versorgungsleitungen VL+, VL mit der Batterieeinheit 12 elektrisch verbunden sind. Die Versorgungsleitungen VL+, VL- führen die von der Batterieeinheit 12 bereitgestellte Modulspannung des Batteriemoduls 2, die hierin ebenfalls mit den Bezugszeichen VL+, VL- bezeichnet wird. In einer oder beiden Versorgungsleitungen VL+, VL- sind vorliegend zudem eine Trennungsvorrichtung 19 und eine Sicherung 20 in Reihe geschaltet vorgesehen. Es ist zu verstehen, dass das Batteriemodul 2 nicht zwingend alle/die in Fig. 2 dargestellten Komponenten aufweisen muss. Das Batteriemodul 2 kann auch alternative oder zusätzliche Komponenten (nicht dargestellt) aufweisen.

Vorliegend kann die Steuereinrichtung 16 als eine (andere/weitere) Detektionseinrichtung im Sinne der Erfindung aufgefasst werden, sofern sie neben der Steuerung der Schalteinrichtung 17 ebenso zum Erfassen eines unzulässigen Betriebszustands des jeweiligen Batteriemoduls 2 eingerichtet ist. Z. B kann die Steuereinrichtung 16 eingerichtet sein, eine unzulässig hohe/niedrige Modulspannung VL+, VL-, eine unzulässig hohe/niedrige Modultemperatur beim Laden / Entladen, kritische Schaltungsfehler im Batteriemodul 2 und dergleichen zu erfassen.

Fig. 2 lässt sich entnehmen, dass die Isolationsvorrichtung 15 mit einem Eingang an dem Steueranschluss 6 des Batteriemoduls 2 liegt, um so ein Steuersignal, z. B. von der zentralen Steuereinheit 3, empfangen zu können. Ein solches Steuersignal kann über eine Steuerleitung S von der Isolationsvorrichtung an die Steuereinrichtung 16 weitergeleitet werden. Von der Steuereinrichtung 16 wiederum kann ein Steuersignal über eine Steuerleitung S an die Schalteinrichtung 17 übertragen werden.

Ferner ist Fig. 2 zu entnehmen, dass der Moduleingang 8 und der Modulausgang 9 jeweils mit der Schalteinrichtung 17 elektrisch verbunden ist.

Wenn Schaltelemente der Schalteinrichtung 17 zu der erwähnten Brückenschaltung verschaltet sind, nimmt die Brückenschaltung im Batteriemodus eine Verbindung der Spannungsleitung VL+ mit dem Moduleingang 8 und eine Verbindung der Spannungsleitung VL- mit dem Modulausgang 9 vor. Damit liegt an dem Moduleingang 8 und dem Modulausgang 9, die von der Batterieeinheit 12 zur Verfügung gestellte Modulspannung VL+, VL-, beispielsweise 3,6 V bei einer einzigen Lithium-Ionen-Zelle, an. Im Überbrückungsmodus hingegen kann die Brückenschaltung eine elektrische Verbindung zwischen dem Moduleingang 8 und dem Modulausgang 9 herstellen, so dass die Batterieeinheit 12 abgekoppelt ist und das Batteriemodul 2 selbst keine Spannung zwischen Moduleingang 8 und Modulausgang 9 bereitstellt. Der grundsätzliche Aufbau einer derartigen Brückenschaltung ist an sich wohl bekannt und braucht daher nicht detaillierter beschrieben zu werden.

Die Isolationsvorrichtung 15 kann eine galvanische Trennung zwischen dem Batteriemodul 2 und der Steuereinheit 3 bereitstellen. Die galvanische Trennung kann beispielsweise mittels einer induktiven Kopplungseinrichtung oder beispielsweise mittels Optokoppler (beides nicht dargestellt) erfolgen.

Die in der Versorgungsleitung VL- liegende Sicherung 20 (z. B. Schmelzsicherung) kann vorgesehen sein, um bei einem zu großen Stromfluss eine automatische Trennung der Batterieeinheit 12 zu erreichen. Alternativ können die Trennvorrichtung 19 und/oder die Sicherung 20 auch in der Versorgungsleitung VL+ vorgesehen sein.

Die Trennvorrichtung 19 kann vorgesehen sein, um bei Bedarf eine Trennung der Batterieeinheit 12 von einem oder mehreren der übrigen Elemente, wie Isolationsvorrichtung 15, Steuereinrichtung 16, Schalteinrichtung 17 und Kondensator 18 vorzunehmen. Diese Trennung kann gesteuert erfolgen, beispielsweise über ein Steuersignal von der systemzentralen Steuereinheit 3. Im vorliegenden Fall erfolgt die Trennung aller Elemente. Denkbar ist aber auch, bspw. nur die Schalteinrichtung 17 von der Batterieeinheit 12 zu trennen. Die Trennvorrichtung 19 selbst kann ein oder mehrere Schaltelemente (nicht dargestellt), zum Beispiel MOSFET-Transistor/en, aufweisen. Das oder die Schaltelemente der Trennvorrichtung 19 können im Wesentlichen die gleichen Bauelemente sein wie Schaltelemente der Schalteinrichtung 17, ohne jedoch zwingend hierauf beschränkt zu sein.

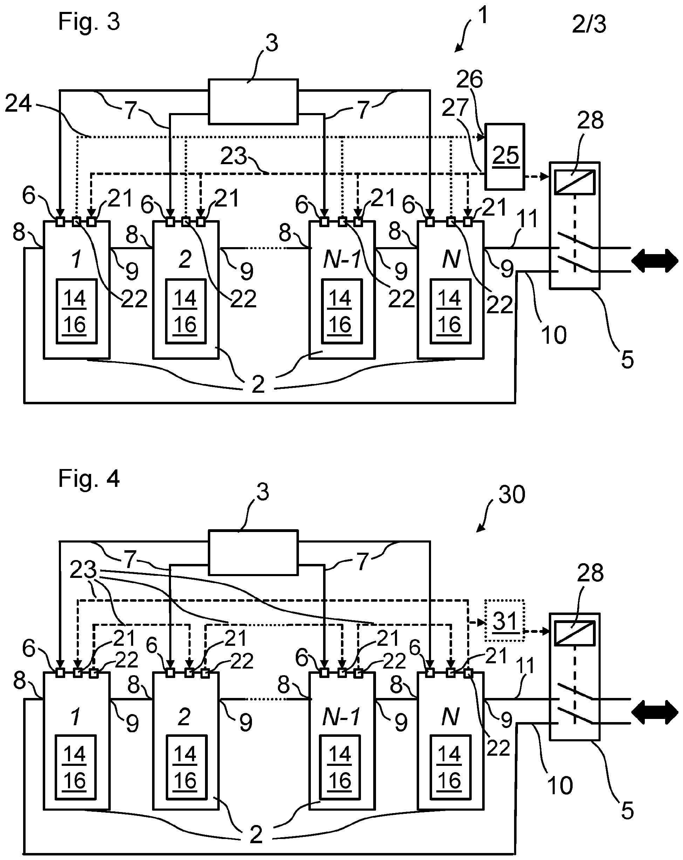

Fig. 3 stellt eine detaillierte Ansicht des Energieversorgungssystems 1 aus Fig. 1 dar. Dieser Ansicht ist zu entnehmen, dass die Batteriemodule 2 des Energieversorgungssystems 1 neben dem Steueranschluss 6 beispielhaft zwei weitere Steueranschlüsse aufweisen, nämlich einen Steuereingang 21 zum Empfangen eines Steuereingangssignals, insbesondere eines Abschaltsteuersignals und einen Steuerausgang 22 zum Ausgeben eines Steuersignals, insbesondere eines Fehlersteuersignals. Die mehreren Batteriemodule 2 des Energieversorgungssystems 1 sind jeweils eingerichtet, in Reaktion auf das Abschaltsteuersignal am Steuereingang 21, das beispielhaft ein LOW-aktives Steuersignal sein kann, einen Abschaltzustand einzunehmen, in welchem die Modulspannung VL+, VL- vom Eingangs- und Ausgangsanschluss 8, 9 getrennt ist. Weiterhin sind die Batteriemodule 2 vorliegend eingerichtet, jeweils am Steuerausgang 22 den von der Detektionsschaltung 14 und/oder 16 erfassten unzulässigen Betriebszustand mittels des Fehlersteuersignals auszugeben, das ebenfalls beispielhaft ein LOW-aktives Steuersignal sein kann.

Fig. 3 ist weiter zu entnehmen, dass das Energieversorgungssystem 1 eine Fehlersteuerschaltung aufweist, die bei dem vorliegend darstellten Ausführungsbeispiel eine Signalleitung 23 zur Übertragung des Abschaltsteuersignals und eine separate Signalleitung 24 zur Übertragung des Fehlersteuersignals aufweist. Darüber hinaus weist die Fehlerschaltung des gezeigten Ausführungsbeispiels eine separate Fehlersteuereinheit 25 auf, die zum Beispiel eine prozessorgesteuerte Steuereinheit (z. B. Mikroprozessor, Mikrocontroller u. dgl.) sein kann.

Die Fehlersteuerschaltung des Energieversorgungssystems 1 verbindet den Steuerausgang 22 jedes der mehreren Batteriemodule 2 vermittels der Fehlersteuereinheit 25 mit dem Steuereingang 21 jedes anderen der mehreren Batteriemodule 2. Hierzu weist die Fehlersteuereinheit 25 einen Fehlersteuereingang 26 auf, an den der Steuerausgang 22 der mehreren Batteriemodule 2 geführt ist, und einen Fehlersteuerausgang 27, der an den Steuereingang 21 der mehreren Batteriemodule 2 geführt ist. Die Fehlersteuereinheit 25 ist vorliegend eingerichtet, in Reaktion auf das Vorliegen des Fehlersteuersignals am Fehlersteuereingang 26 das Abschaltsteuersignal am Fehlersteuerausgang 27 zu erzeugen.

Darüber hinaus ist die Fehlersteuereinheit 25 des vorliegenden Energieversorgungssystems 1 eingerichtet, ein Schaltmittel 28 (aufweisend z. B. Halbleiterschalter wie MOSFET oder ein Schaltrelais) zu steuern, mit welchem die mehreren Batteriemodule 2 bei Vorliegen des Abschaltsteuersignals vom Stromversorgungsanschluss 5 des Energieversorgungssystems 1 getrennt werden können.

Die Signalleitungen 23, 24 können Datenübertragungsleitungen eines einzigen systeminternen Datenkommunikationsbusses (z. B. CAN-Bus) sein. Die Signalleitungen 23, 24 können auch Datenübertragungsleitungen eines zweiten, redundanten Datenkommunikationsbusses (z. B. CAN-Bus) sein. Die Signalleitungen 23, 24 können auch lediglich einfache Steuerleitungen zur Übertragung des Abschaltsteuersignals bzw. des Fehlersteuersignals sein und unabhängig von einem ggfs. vorgesehenen Datenkommunikationsbus sein.

Der Steuerausgang 22 der mehreren Batteriemodule 2 kann als Open-Drain-Ausgang oder Open-Collector-Ausgang ausgebildet sein.

Besonders bevorzugt kann/können das Abschaltsteuersignal und/oder das Fehlersteuersignal als LOW-aktives Steuersignal ausgebildet sein.

Fig. 4 stellt ein Funktionsdiagramm eines weiteren Ausführungsbeispiels eines Energieversorgungssystems 30 gemäß der Erfindung dar. Das in Fig. 4 dargestellte Energieversorgungssystem 30 unterscheidet sich von dem Energieversorgungssystem 1 aus Fig. 3 im Wesentlichen nur dadurch, dass Fehlersteuerschaltung den Steuerausgang 22 jedes der mehreren Batteriemodule 2 jeweils mit dem Steuereingang 21 lediglich eines einzigen anderen der Batteriemodule 2 verbindet, so dass die Batteriemodule 2 nach dem Daisy-Chain-Prinzip in Serie miteinander verbunden sind. Sobald eines der Batteriemodule 2 das Fehlersignal auf einer der Signalleitungen 23 ausgibt, wird hierdurch das benachbarte Batteriemodul 2 abgeschaltet, das seinerseits seinen Nachbarn abschaltet usw. Hierdurch kann auf eine Fehlersteuereinheit 25 wie bei dem Energieversorgungssystem 1 aus Fig. 3 verzichtet werden. Dennoch weist das in Fig. 4 dargestellte Energieversorgungssystem 30 zumindest eine Fehlersteuereinheit 31 auf, die vorliegend im Fehlerfall wenigstens ein Schaltsignal zum Schalten des Schaltmittels 28 bereitstellt. Hierzu kann die Fehlersteuereinheit 31 als einfache Transistor- oder Logikgatterschaltung (nicht dargestellt) aufgebaut sein. Eine prozessorgesteuerte Schaltung ist nicht zwingend erforderlich.

Es ist ferner darauf hinzuweisen, dass die Fehlersteuereinheit 31 (ähnlich wie die Fehlersteuereinheit 25 des Energieversorgungssystems 1) nicht zwingend für die Erfindung erforderlich ist.

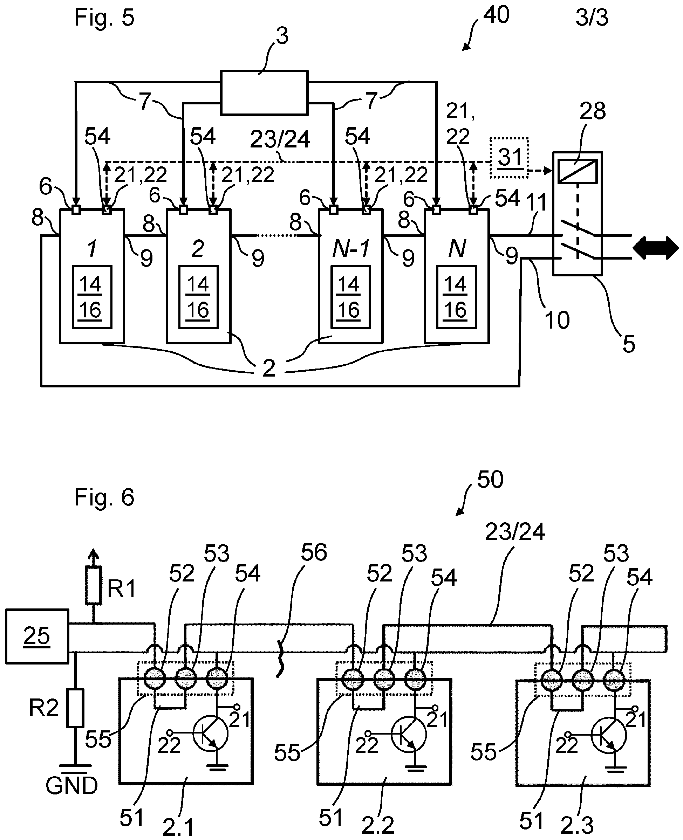

Fig. 5 stellt ein Funktionsdiagramm eines noch weiteren Ausführungsbeispiels eines Energieversorgungssystems 40 gemäß der Erfindung dar. Das in Fig. 5 dargestellte Energieversorgungssystem 40 unterscheidet sich von dem Energieversorgungssystem 30 aus Fig. 4 im Wesentlichen nur dadurch, dass die mehreren Batteriemodule 2 jeweils einen Steueranschlusskontakt aufweisen, der sowohl den Steuereingang 21 als auch den Steuerausgang 22 ausbildet, wobei das Abschaltsteuersignal und das Fehlersteuersignal über den Steueranschlusskontakt als bidirektionales Steuersignal geführt sind. Des Weiteren sind bei dem Energieversorgungssystem 40 die Steuerein- und Steuerausgänge 21, 22 aller Batteriemodule 2 miteinander verbunden. Die Fehlersteuereinheit 31 erfüllt dieselbe Funktion wie beim Energieversorgungssystem 30 aus Fig. 4, wobei die Fehlersteuereinheit 31 für die Erfindung grundsätzlich nicht zwingend erforderlich ist.

Fig. 6 stellt eine detaillierte Ansicht eines Teils einer beispielhaften Fehlersteuerschaltung eines noch weiteren Ausführungsbeispiels eines Energieversorgungssystems 50 gemäß der Erfindung dar. Beispielhaft weist das Energieversorgungssystem 50 drei Batteriemodule 2 auf, nämlich 2.1, 2.2 und 2.3.

Außerdem ist zu erkennen, dass die mehreren Batteriemodule 2 jeweils einen Durchschleifkontakt 51 aufweisen, der wiederum einen Eingangskontakt 52 und einen Ausgangskontakt 53 aufweist, die modulseitig elektrisch leitend miteinander verbunden sind. Ferner weist jedes Batteriemodul 2 einen Steueranschlusskontakt 54 auf, über den der Steuerausgang 22 und ggfs. der Steuereingang 21 jedes Batteriemoduls 2 geführt sein können.

Bei dem vorliegenden Ausführungsbeispiel des Energieversorgungssystems 50 ist der Steuerausgang 22 der Batteriemodule 2 als Open-Drain-Ausgang bzw. Open-Collector-Ausgang ausgebildet. Des Weiteren sind das Abschaltsteuersignal und das Fehlersteuersignal vorliegend als jeweils LOW-aktives Steuersignal ausgebildet. Zu diesem Zweck kann die Signalleitung 23 beispielsweise über einen ersten Widerstand R1 an ein positives Spannungspotential (z. B. Versorgungsspannungspotential) geschaltet sein und über einen zweiten Widerstand R2 gegen Massepotential (GND) geschaltet sein. Bevorzugt gilt für den zweiten Widerstand: R2 >> R1. Beispielsweise kann R2 einen 10-mal größeren Widerstand aufweisen als R1.

Die Anschlusskontakte 52, 53, 54 sind vorliegend jeweils in einem gemeinsamen Steckergehäuse bzw. Steckverbinder 55 aufgenommen und bilden einen gemeinsamen Steckverbinder. Dies ist jedoch nicht zwingend erforderlich. Die Anschlusskontakte 52, 53, 54 könnten auch als individuelle, getrennte Steckverbinder jeweils mit dem entsprechenden Batteriemodul 2 verbunden sein.

Ausgehend von der Fehlersteuereinheit 25 ist bei der in Fig. 6 dargestellten Fehlersteuerschaltung die Signalleitung 23 bzw. 24 zuerst über die Durchschleifkontakte 51 jedes der drei gezeigten Batteriemodule 2 in Serie geführt. Die Steueranschlusskontakte 54 der Batteriemodule 2 sind nur mit der vom letzten Batteriemodul 2.3 der Reihe und zur Fehlersteuereinheit 25 zurückgeführten Signalleitung 23 bzw. 24 verbunden, wie in Fig. 6 zu erkennen ist.

Löst sich in einem Fehlerfall der Steckverbinder 55 von einem der Batteriemodule 2, wird die über den Durchschleifkontakt 51 bewirkte Durchleitung des entsprechenden Steuersignals bzw. die Signalleitung 23/24 unterbrochen. Der Widerstand R2 bewirkt, dass die Signalleitung 23/24 auf Massepotential gezogen wird, was dem LOW-aktiven Abschaltsteuersignal entspricht, das folglich am Steueranschlusskontakt 54 jedes Batteriemoduls 2 anliegt und gleichermaßen am unteren Signalleitungsanschluss der Fehlersteuereinheit 25. Dementsprechend kann ein Fehler durch Ablösen der Steckverbindung 55 von einem der Batteriemodule 2 zuverlässig erkannt werden und infolgedessen können alle anderen Batteriemodule 2 abgeschaltet werden, um einen elektrisch sicheren Zustand des Energieversorgungssystems 50 herzustellen.

Die in Fig. 6 gezeigte Fehlersteuerschaltung ist ebenfalls in der Lage, einen in Fig. 6 beispielhaft gekennzeichneten Kabelbruch 56 zu erkennen. Hierzu erkennt die Fehlersteuereinheit 25 am unteren Signalleitungsanschluss das nach dem Kabelbruch 56 durch den Widerstand R2 bewirkte LOW-aktive Abschaltsignal. Infolgedessen kann die Fehlersteuereinheit 25 die am oberen Signalleitungsanschluss angeschlossene Signalleitung 23/24 ebenfalls LOW-aktiv schalten, so dass die Batteriemodule 2 sicher abschalten können.

In einem Ausführungsbeispiel des erfindungsgemäßen Verfahrens werden für einen Betrieb eines Energieversorgungssystems, wie zum Beispiel das Energieversorgungssystem 1 aus Fig. 1, mehrere, in Serie steuerbar schaltbare Batteriemodule, z. B. Module 2, bereitgestellt. Die Batteriemodule werden angesteuert (z. B. mittels der Steuereinheit 3), um unterschiedliche (d. h. zeitvariable) Spannungen an einem Stromversorgungsanschluss (z. B. Anschluss 5) des Energieversorgungssystems bereitzustellen. Wahlweises wird eine von jeweils einer Batterieeinheit (z. B. Batterieeinheit 12) jedes Batteriemoduls bereitgestellte Modulspannung (z. B. VL+, VL-) an einen Eingangsanschluss (z. B. Moduleingang 8) und Ausgangsanschluss (z. B. Modulausgang 9) des Batteriemoduls mittels einer Schalteinrichtung 17 geschaltet, um elektrische Energie am Eingangs- und Ausgangsanschluss bereitzustellen. Weiterhin wird ein Steuereingangssignal über einen Steuereingang (z. B. Eingang 21) des jeweiligen Batteriemoduls empfangen, wobei die mehreren Batteriemodule jeweils in Reaktion auf ein Abschaltsteuersignal am Steuereingang in einen Abschaltzustand gebracht werden, in welchem die Modulspannung vom Eingangs- und Ausgangsanschluss getrennt wird. Ein unzulässiger Betriebszustand jeweils von den mehreren Batteriemodulen wird mittels einer jeweiligen Detektionsschaltung (z. B. Zellenüberwachungseinheit 14 und/oder Steuereinrichtung 16 der Schalteinrichtung 17) erfasst. Der erfasste unzulässige Betriebszustand wird mittels eines Fehlersteuersignals an einem Steuerausgang (z. B. Ausgang 22) des jeweiligen Batteriemoduls ausgegeben, wobei das Fehlersteuersignal vom Steuerausgang wenigstens eines der mehreren Batteriemodule an den Steuereingang wenigstens eines anderen der mehreren Batteriemodule mittels einer Fehlersteuerschaltung (z. B. Signalleitungen 23, 24 und ggfs. Fehlersteuereinheit 25) übertragen wird.

Das hierin offenbarte erfindungsgemäße Energieversorgungssystem sowie das offenbarte erfindungsgemäße Verfahren zum Betrieb eines Energieversorgungssystems sind nicht auf die hierin jeweils beschriebenen Ausführungsformen beschränkt, sondern umfassen auch gleich wirkende weitere Ausführungsformen, die sich aus technisch sinnvollen weiteren Kombinationen der hierin beschriebenen Merkmale des Energieversorgungssystems sowie des Verfahrens ergeben. Insbesondere sind die vorstehend in der allgemeinen Beschreibung und der Figurenbeschreibung genannten und/oder in den Figuren allein gezeigten Merkmale und Merkmalskombinationen nicht nur in den jeweils hierin explizit angegebenen Kombinationen, sondern auch in anderen Kombinationen oder in Alleinstellung verwendbar, ohne den Rahmen der vorliegenden Erfindung zu verlassen, welcher durch die unabhängigen Ansprüche definiert ist.

In bevorzugter Ausführung wird das erfindungsgemäße Energieversorgungssystem als Energieversorgungssystem zur mobilen Stromversorgung leistungsfähiger Arbeitsmaschinen, insbesondere mit einer elektrischen Aufnahmeleistung über 1 kW wie z. B. Diamantbohrgeräte, Hochdruckreiniger, Industriestaubsauger und dergleichen, verwendet. Hierbei kann das Energieversorgungssystem bevorzugt ein mobiles, insbesondere tragbares, System sein.

### Bezugszeichenliste

- 1: Energieversorgungssystem
- 2: Batteriemodul
- 3: Steuereinheit
- 4: Glättungsdrossel
- 5: Stromversorgungsanschluss
- 6: Steueranschluss
- 7: Steuerleitung
- 8: Moduleingang
- 9: Modulausgang
- 10: Leitungsabschnitt
- 11: Leitungsabschnitt
- 12: Batterieeinheit
- 14: Detektionseinrichtung, Batteriezellenüberwachungseinheit
- 15: Isolationsvorrichtung
- 16: Steuereinrichtung und Detektionseinrichtung
- 17: Schaltelemente
- 18: Kondensator
- 19: Trennungsvorrichtung
- 20: Sicherung
- 21: Steuereingang
- 22: Steuerausgang
- 23: Erste Signalleitung
- 24: Zweite Signalleitung
- 25: Fehlersteuereinheit
- 26: Fehlersteuereingang
- 27: Fehlersteuerausgang
- 28: Schaltmittel
- 30: Energieversorgungssystem
- 31: Fehlersteuereinheit
- 40: Energieversorgungssystem
- 50: Energieversorgungssystem
- 51: Durchschleifkontakt
- 52: Eingangskontakt
- 53: Ausgangskontakt
- 54: Steueranschlusskontakt
- 55: Steckergehäuse, Steckverbinder
- 56: Kabelbruch

- GND: Massepotential
- R1: Widerstand
- R2: Widerstand
- S: Steuerleitung
- VL+: Modulspannungs-Pluspotential
- VL-: Modulspannungs-Minuspotential

## Patentansprüche

1. Energieversorgungssystem (1, 30, 40, 50) mit mehreren Batteriemodulen (2), die steuerbar in Serie schaltbar sind, um unterschiedliche Spannungen an einem Stromversorgungsanschluss (5) des Energieversorgungssystems (1, 30, 40, 50) bereitzustellen, und einer Steuereinheit (3) zur Ansteuerung der Batteriemodule (2), wobei die mehreren Batteriemodule (2) jeweils einen Eingangsanschluss (8) und einen Ausgangsanschluss (9), eine Batterieeinheit (12) zur Bereitstellung einer Modulspannung (VL+, VL-), eine Schalteinrichtung (17) zum wahlweisen Schalten der Modulspannung (VL+, VL-) an den Eingangs- (8) und Ausgangsanschluss (9), und einen Steuereingang (6, 21) zum Empfangen eines Steuereingangssignals aufweisen, wobei die mehreren Batteriemodule (2) jeweils eingerichtet sind, in Reaktion auf ein Abschaltsteuersignal am Steuereingang (6, 21) einen Abschaltzustand einzunehmen, in welchem die Modulspannung (VL+, VL-) vom Eingangs- und Ausgangsanschluss (8, 9) getrennt ist, wobei
die mehreren Batteriemodule (2) jeweils eine Detektionsschaltung (14, 16) zum Erfassen jeweils eines eigenen unzulässigen Betriebszustands aufweisen,
**dadurch gekennzeichnet, dass**
die mehreren Batteriemodule (2) jeweils einen Steuerausgang (22) zum Ausgeben des erfassten unzulässigen Betriebszustands mittels eines Fehlersteuersignals aufweisen, wobei eine Fehlersteuerschaltung (23, 24, 25) vorgesehen ist, die den Steuerausgang (22) wenigstens eines der mehreren Batteriemodule (2) mit dem Steuereingang (21) wenigstens eines anderen der mehreren Batteriemodule (2) verbindet, wobei die mehreren Batteriemodule (2) jeweils wenigstens einen Durchschleifkontakt (51) aufweisen, der einen Eingangs- (52) und einen Ausgangskontakt (53) aufweist, die modulseitig elektrisch leitend miteinander verbunden sind, und die Fehlersteuerschaltung (23, 24, 25) ausgebildet ist, den Steuerausgang (22) und/oder Steuereingang (21) wenigstens eines der Batteriemodule (2) mit dem Durchschleifkontakt (51) wenigstens eines anderen der Batteriemodule (2) in Reihe zu schalten.

2. Energieversorgungssystem gemäß Anspruch 1,
**dadurch gekennzeichnet, dass**
die Fehlersteuerschaltung (23, 24) den Steuerausgang (22) jedes der mehreren Batteriemodule (2) jeweils mit dem Steuereingang (21) lediglich eines einzigen anderen der Batteriemodule (2) verbindet.

3. Energieversorgungssystem gemäß Anspruch 1,
**dadurch gekennzeichnet, dass**
die Fehlersteuerschaltung (23, 24, 25) den Steuerausgang (22) jedes der mehreren Batteriemodule (2) mit dem Steuereingang (21) jedes anderen der Batteriemodule (2) verbindet.

4. Energieversorgungssystem gemäß einem der vorhergehenden Ansprüche, **dadurch gekennzeichnet, dass**
die Fehlersteuerschaltung eine separate Fehlersteuereinheit (25) aufweist, die einen Fehlersteuereingang (26), an den der Steuerausgang (22) wenigstens eines der mehreren Batteriemodule (2) geführt ist, und einen Fehlersteuerausgang (27), der an den Steuereingang (21) wenigstens eines der mehreren Batteriemodule (2) geführt ist, aufweist, wobei die Fehlersteuereinheit (25) eingerichtet ist, in Reaktion auf das Vorliegen des Fehlersteuersignals am Fehlersteuereingang (26) das Abschaltsteuersignal am Fehlersteuerausgang (27) zu erzeugen.

5. Energieversorgungssystem gemäß einem der vorhergehenden Ansprüche, **dadurch gekennzeichnet, dass**
die mehreren Batteriemodule (2) jeweils einen Steueranschlusskontakt (54) aufweisen, der sowohl den Steuereingang (21) als auch den Steuerausgang (22) ausbildet, wobei das Abschaltsteuersignal und das Fehlersteuersignal über den Steueranschlusskontakt (54) als bidirektionales Steuersignal geführt sind.

6. Energieversorgungssystem gemäß einem der vorhergehenden Ansprüche, **dadurch gekennzeichnet, dass**
das den Abschaltzustand der mehreren Batteriemodule (2) bewirkende Abschaltsteuersignal und/oder das den unzulässigen Betriebszustand der mehreren Batteriemodule (2) repräsentierende Fehlersteuersignal ein LOW-aktives Steuersignal ist.

7. Energieversorgungssystem gemäß einem der vorhergehenden Ansprüche, **dadurch gekennzeichnet, dass**
der Steuerausgang (22) der mehreren Batteriemodule (2) als Open-Drain-Ausgang oder Open-Collector-Ausgang ausgebildet ist.

8. Energieversorgungssystem gemäß einem der vorhergehenden Ansprüche, **dadurch gekennzeichnet, dass**
die Fehlersteuerschaltung (23, 24, 25, 31) einen die mehreren Batteriemodule (2) miteinander verbindenden Datenkommunikationsbus mit wenigstens einer Datenübertragungsleitung (23, 24) aufweist, wobei der Steuerausgang (22) und/oder der Steuereingang (21) der mehreren Batteriemodule (2) mit der wenigstens einen Datenübertragungsleitung (23, 24) verbunden ist/sind.

9. Energieversorgungssystem gemäß einem der vorhergehenden Ansprüche, **dadurch gekennzeichnet, dass**
die mehreren Batteriemodule (2) jeweils eine Isolationsvorrichtung (15) aufweisen, die eine galvanische Trennung zwischen der Detektionsschaltung (16) und der Fehlersteuerschaltung (23, 24, 25, 31) ausbildet.

10. Energieversorgungssystem gemäß einem der vorhergehenden Ansprüche, **dadurch gekennzeichnet, dass**
ein mit der Fehlersteuerschaltung (25, 31) verbundenes Schaltmittel (28) vorgesehen ist, das eingerichtet ist, die mehreren Batteriemodule (2) bei Vorliegen des Abschaltsteuersignals vom Stromversorgungsanschluss (5) des Energieversorgungssystems (1, 30, 40, 50) zu trennen.

11. Energieversorgungssystem gemäß einem der vorhergehenden Ansprüche, **dadurch gekennzeichnet, dass**
der unzulässigen Betriebszustand vorliegt bei Über-/Unterschreiten eines vorbestimmten maximalen bzw. minimalen Spannungsschwellenwerts der Modulspannung und/oder von Zellspannungen mehrerer Batteriezellen der Batterieeinheit (2), einer vorbestimmten Spannungsdifferenz zwischen unterschiedlichen Batteriezellen der Batterieeinheit (2), eines vorbestimmten maximalen bzw. minimalen Stromschwellenwerts am Stromversorgungsanschluss (5) des Energieversorgungssystems (1, 30, 40, 50) und/oder innerhalb des Energieversorgungssystems (1, 30, 40, 50), eines vorbestimmten maximalen bzw. minimalen Temperaturschwellenwerts der mehreren Batteriemodule (2) bei einem Lade- und/oder Entladevorgang.

12. Energieversorgungssystem gemäß einem der vorhergehenden Ansprüche, **dadurch gekennzeichnet, dass**
das Energieversorgungssystem (1, 30, 40, 50) mobil, insbesondere tragbar, ist.

13. Verfahren zum Betrieb eines Energieversorgungssystems (1, 30, 40, 50), vorzugsweise nach einem der vorhergehenden Ansprüche, aufweisend die Schritte:
- Bereitstellen mehrerer, in Serie steuerbar schaltbare Batteriemodule (2),
- Ansteuern der Batteriemodule (2), um unterschiedliche Spannungen an einem Stromversorgungsanschluss (5) des Energieversorgungssystems (1, 30, 40, 50) bereitzustellen, und
- wahlweises Schalten einer von jeweils einer Batterieeinheit (12) der mehreren Batteriemodule (2) bereitgestellten Modulspannung (VL+, VL-) an einen Eingangs- (8) und Ausgangsanschluss (9) des jeweiligen Batteriemoduls (2) mittels einer Schalteinrichtung (17), um elektrische Energie am Eingangs- (8) und Ausgangsanschluss (9) bereitzustellen,
- Empfangen eines Steuereingangssignals über einen Steuereingang (6, 21) des jeweiligen Batteriemoduls (2), wobei die mehreren Batteriemodule (2) jeweils in Reaktion auf ein Abschaltsteuersignal am Steuereingang (6, 21) in einen Abschaltzustand gebracht werden, in welchem die Modulspannung vom Eingangs- und Ausgangsanschluss (8, 9) getrennt wird, wobei
ein unzulässiger Betriebszustand jeweils von den mehreren Batteriemodulen (2) mittels einer jeweiligen Detektionsschaltung (14, 16) erfasst wird, **dadurch gekennzeichnet, dass**
der erfasste unzulässige Betriebszustands mittels eines Fehlersteuersignals an einem Steuerausgang (22) des jeweiligen Batteriemoduls (2) ausgegeben wird, wobei das Fehlersteuersignal vom Steuerausgang (22) wenigstens eines der mehreren Batteriemodule (2) an den Steuereingang (21) wenigstens eines anderen der mehreren Batteriemodule (2) mittels einer Fehlersteuerschaltung (23, 24, 25) übertragen wird, wobei die mehreren Batteriemodule (2) jeweils wenigstens einen Durchschleifkontakt (51) aufweisen, der einen Eingangs- (52) und einen Ausgangskontakt (53) aufweist, die modulseitig elektrisch leitend miteinander verbunden sind, und der Steuerausgang (22) und/oder Steuereingang (21) wenigstens eines der Batteriemodule (2) mit dem Durchschleifkontakt (51) wenigstens eines anderen der Batteriemodule (2) mittels der Fehlersteuerschaltung (23, 24, 25) in Reihe geschaltet ist/sind.

## Claims

1. An energy supply system (1, 30, 40, 50) having a plurality of battery modules (2), which can be connected in series in a controllable manner in order to provide different voltages at a power supply terminal (5) of the energy supply system (1, 30, 40, 50), and a control unit (3) for activating the battery modules (2), the plurality of battery modules (2) in each case having an input terminal (8) and an output terminal (9), a battery unit (12) for providing a module voltage (VL+, VL-), switching device (17) for optionally switching the module voltage (VL+, VL-) to the input (8) and output terminal (9), and a control input (6, 21) for receiving a control input signal, the plurality of battery modules (2) in each case being configured to assume a switched-off state in reaction to a switch-off control signal at the control input (6, 21), in which state the module voltage (VL+, VL-) is disconnected from the input and output terminal (8, 9),
the plurality of battery modules (2) in each case having a detection circuit (14, 16) for detecting a non-permissible operating state of its own in each case,
**characterized in that**
the plurality of battery modules (2) in each case have a control output (22) for outputting the detected non-permissible operating state by means of a fault control signal, wherein a fault control circuit (23, 24, 25) is provided, which connects the control output (22) of at least one of the plurality of battery modules (2) to the control input (21) of at least one other of the plurality of battery modules (2), wherein the plurality of battery modules (2) in each case have at least one loop-through contact (51), which has an input (52) and an output contact (53), which are connected to one another in an electrically conductive manner on the module side, and the fault control circuit (23, 24, 25) is designed to connect the control output (22) and/or control input (21) of at least one of the battery modules (2) in series to the loop-through contact (51) of at least one other of the battery modules (2).

2. The energy supply system according to Claim 1,
**characterized in that**
the fault control circuit (23, 24) connects the control output (22) of each of the plurality of battery modules (2) in each case to the control input (21) of only one single other of the battery modules (2).

3. The energy supply system according to Claim 1,
**characterized in that**
the fault control circuit (23, 24, 25) connects the control output (22) of each of the plurality of battery modules (2) to the control input (21) of each of the other battery modules (2).

4. The energy supply system according to one of the preceding claims, **characterized in that**
the fault control circuit has a separate fault control unit (25) which has a fault control input (26), to which the control output (22) of at least one of the plurality of battery modules (2) is routed, and a fault control output (27), which is routed to the control input (21) of at least one of the plurality of battery modules (2), wherein the fault control unit (25) is configured to generate the switch-off control signal at the fault control output (27) in reaction to the presence of the fault control signal at the fault control input (26).

5. The energy supply system according to one of the preceding claims, **characterized in that**
the plurality of battery modules (2) in each case have a control connector contact (54) which forms both the control input (21) and the control output (22), wherein the switch-off control signal and the fault control signal are routed via the control connector contact (54) as a bidirectional control signal.

6. The energy supply system according to one of the preceding claims, **characterized in that**
the switch-off control signal which effects the switched-off state of the plurality of battery modules (2) and/or the fault control signal which represents the non-permissible operating state of the plurality of battery modules (2) is an active LOW control signal.

7. The energy supply system according to one of the preceding claims, **characterized in that**
the control output (22) of the plurality of battery modules (2) is designed as an open drain output or open collector output.

8. The energy supply system according to one of the preceding claims, **characterized in that**
the fault control circuit (23, 24, 25, 31) has a data communication bus connecting the plurality of battery modules (2) to one another and having at least one data transmission line (23, 24), wherein the control output (22) and/or the control input (21) of the plurality of battery modules (2) is/are connected to the at least one data transmission line (23, 24).

9. The energy supply system according to one of the preceding claims, **characterized in that**
the plurality of battery modules (2) in each case have an isolating device (15) which forms a galvanic isolation between the detection circuit (16) and the fault control circuit (23, 24, 25, 31).

10. The energy supply system according to one of the preceding claims, **characterized in that**
switching equipment (28) which is connected to the fault control circuit (25, 31) and is configured to disconnect the plurality of battery modules (2) from the power supply terminal (5) of the energy supply system (1, 30, 40, 50) in the event of the presence of the switch-off control signal.

11. The energy supply system according to one of the preceding claims, **characterized in that**
the non-permissible operating state is provided in the event of exceeding/falling below a predetermined maximum or minimum voltage threshold value of the module voltage and/or cell voltages of a plurality of battery cells of the battery unit (2), a predetermined voltage difference between different battery cells of the battery unit (2), a predetermined maximum or minimum current threshold value at the power supply terminal (5) of the energy supply system (1, 30, 40, 50), and/or a predetermined maximum or minimum temperature threshold value of the plurality of battery modules (2) inside the energy supply system (1, 30, 40, 50) in a charging and/or discharging process.

12. The energy supply system according to one of the preceding claims, **characterized in that**
the energy supply system (1, 30, 40, 50) is mobile, particularly portable.

13. A method for operating an energy supply system (1, 30, 40, 50), preferably according to one of the preceding claims, having the steps:
- providing a plurality of battery modules (2) which can be connected in series in a controllable manner,
- activating the battery modules (2) in order to provide different voltages at a power supply terminal (5) of the energy supply system (1, 30, 40, 50), and
- selectively switching of a module voltage (VL+, VL-), which is provided by in each case one battery unit (12) of the plurality of battery modules (2), to an input (8) and output terminal (9) of the respective battery module (2) by means of a switching device (17), in order to provide electrical energy at the input (8) and output terminal (9),
- receiving a control input signal via a control input (6, 21) of the respective battery module (2), wherein the plurality of battery modules (2) are in each case converted to a switched-off state in reaction to a switch-off control signal at the control input (6, 21), in which state the module voltage is disconnected from the input and output terminal (8, 9), wherein
a non-permissible operating state is in each case detected by the plurality of battery modules (2) of a respective detection circuit (14, 16),
**characterized in that**
the detected non-permissible operating state is outputted by means of a fault control signal at a control output (22) of the respective battery module (2), wherein the fault control signal is transmitted from the control output (22) of at least one of the plurality of battery modules (2) to the control input (21) of at least one other of the plurality of battery modules (2) by means of a fault control circuit (23, 24, 25), wherein the plurality of battery modules (2) in each case have at least one loop-through contact (51), which has an input (52) and an output contact (53), which are connected to one another in an electrically conductive manner on the module side, and the control output (22) and/or control input (21) of at least one of the battery modules (2) is/are connected in series to the loop-through contact (51) of at least one other of the battery modules (2) by means of the fault control circuit (23, 24, 25).

## Revendications

1. Système d'alimentation en énergie (1, 30, 40, 50) comprenant une pluralité de modules de batterie (2) qui peuvent être connectés en série de manière commandable pour fournir différentes tensions au niveau d'un raccord d'alimentation en courant (5) du système d'alimentation en énergie (1, 30, 40, 50), ainsi qu'une unité de commande (3) pour commander les modules de batterie (2), dans lequel la pluralité de modules de batterie (2) présentent chacun un raccord d'entrée (8) et un raccord de sortie (9), une unité de batterie (12) pour fournir une tension de module (VL+, VL-), un dispositif de commutation (17) pour commuter sélectivement la tension de module (VL+, VL-) vers le raccord d'entrée (8) et de sortie (9), et une entrée de commande (6, 21) pour recevoir un signal d'entrée de commande, dans lequel la pluralité de modules de batterie (2) sont chacun configurés pour prendre un état de coupure en réponse à un signal de commande de coupure au niveau de l'entrée de commande (6, 21), dans lequel la tension de module (VL+, VL-) est séparée du raccord d'entrée et de sortie (8, 9), dans lequel la pluralité de modules de batterie (2) présentent chacun un circuit de détection (14, 16) pour détecter respectivement un propre état de fonctionnement inadmissible,
**caractérisé par le fait que**
la pluralité de modules de batterie (2) présentent chacun une sortie de commande (22) pour délivrer l'état de fonctionnement inadmissible détecté au moyen d'un signal de commande d'erreur, dans lequel il est prévu un circuit de commande d'erreur (23, 24, 25) qui relie la sortie de commande (22) d'au moins un de la pluralité de modules de batterie (2) à l'entrée de commande (21) d'au moins un autre de la pluralité de modules de batterie (2), dans lequel la pluralité de modules de batterie (2) présentent chacun au moins un contact de bouclage (51) qui présente un contact d'entrée (52) et un contact de sortie (53) qui sont reliés, du côté du module, de manière électriquement conductrice l'un à l'autre, et le circuit de commande d'erreur (23, 24, 25) est conçu pour connecter en série la sortie de commande (22) et/ou l'entrée de commande (21) d'au moins un des modules de batterie (2) au contact de bouclage (51) d'au moins un autre des modules de batterie (2).

2. Système d'alimentation en énergie selon la revendication 1, **caractérisé par le fait que**
le circuit de commande d'erreur (23, 24) relie la sortie de commande (22) de chacun de la pluralité de modules de batterie (2) respectivement à l'entrée de commande (21) d'un seul autre des modules de batterie (2).

3. Système d'alimentation en énergie selon la revendication 1, **caractérisé par le fait que**
le circuit de commande d'erreur (23, 24, 25) relie la sortie de commande (22) de chacun de la pluralité de modules de batterie (2) à l'entrée de commande (21) de chaque autre des modules de batterie (2).

4. Système d'alimentation en énergie selon l'une quelconque des revendications précédentes,
**caractérisé par le fait que**
le circuit de commande d'erreur comprend une unité de commande d'erreur (25) séparée qui possède une entrée de commande d'erreur (26) à laquelle est guidée à la sortie de commande (22) d'au moins un de la pluralité de modules de batterie (2), et une sortie de commande d'erreur (27) qui est guidée à l'entrée de commande (21) d'au moins un de la pluralité de modules de batterie (2), dans lequel ladite unité de commande d'erreur (25) est conçue pour générer le signal de commande de coupure au niveau de la sortie de commande d'erreur (27) en réponse à la présence du signal de commande d'erreur au niveau de l'entrée de commande d'erreur (26).

5. Système d'alimentation en énergie selon l'une quelconque des revendications précédentes,
**caractérisé par le fait que**
les plusieurs modules de batterie (2) comprennent chacun un contact de connexion de commande (54) qui forme aussi bien l'entrée de commande (21) que la sortie de commande (22), dans lequel le signal de commande de coupure et le signal de commande d'erreur sont acheminés via le contact de connexion de commande (54) en tant que signal de commande bidirectionnel.

6. Système d'alimentation en énergie selon l'une quelconque des revendications précédentes,
**caractérisé par le fait que**
le signal de commande de coupure provoquant l'état de coupure de la pluralité de modules de batterie (2) et/ou le signal de commande d'erreur représentant l'état de fonctionnement inadmissible de la pluralité de modules de batterie (2) est un signal de commande actif BAS.

7. Système d'alimentation en énergie selon l'une quelconque des revendications précédentes,
**caractérisé par le fait que**
la sortie de commande (22) de la pluralité de modules de batterie (2) est conçue en tant que sortie à drain ouvert ou en tant que sortie à collecteur ouvert.

8. Système d'alimentation en énergie selon l'une quelconque des revendications précédentes,
**caractérisé par le fait que**
le circuit de commande d'erreur (23, 24, 25, 31) comprend un bus de communication de données qui relie la pluralité de modules de batterie (2) les uns aux autres et qui comprend au moins une ligne de transmission de données (23, 24), dans lequel la sortie de commande (22) et/ou l'entrée de commande (21) de la pluralité de modules de batterie (2) est/sont connectée(s) à ladite au moins une ligne de transmission de données (23, 24).

9. Système d'alimentation en énergie selon l'une quelconque des revendications précédentes,
**caractérisé par le fait que**
les plusieurs modules de batterie (2) comprennent chacun un dispositif d'isolation (15) qui forme une isolation galvanique entre le circuit de détection (16) et le circuit de commande d'erreur (23, 24, 25, 31).

10. Système d'alimentation en énergie selon l'une quelconque des revendications précédentes,
**caractérisé par le fait qu'**
il est prévu un moyen de commutation (28) qui est relié au circuit de commande d'erreur (25, 31) et qui est conçu pour déconnecter la pluralité de modules de batterie (2) du raccord d'alimentation en courant (5) du système d'alimentation en énergie (1, 30, 40, 50), lorsque le signal de commande de coupure est présent.

11. Système d'alimentation en énergie selon l'une quelconque des revendications précédentes,
**caractérisé par le fait que**
l'état de fonctionnement inadmissible est présent lorsqu'une valeur de seuil de tension maximale ou bien minimale prédéterminée de la tension de module et/ou de tensions de cellules de plusieurs cellules de batterie de l'unité de batterie (2), une différence de tension prédéterminée entre différentes cellules de batterie de l'unité de batterie (2), une valeur de seuil de courant maximale ou bien minimale prédéterminée au niveau du raccord d'alimentation en courant (5) du système d'alimentation en énergie (1, 30, 40, 50) et/ou à l'intérieur du système d'alimentation en énergie (1, 30, 40, 50), une valeur de seuil de température maximale ou bien minimale prédéterminée de la pluralité de modules de batterie (2) pendant un processus de charge et/ou de décharge est dépassée/n'est pas atteinte.

12. Système d'alimentation en énergie selon l'une quelconque des revendications précédentes,
**caractérisé par le fait que**
le système d'alimentation en énergie (1, 30, 40, 50) est mobile, en particulier portable.

13. Procédé destiné à faire fonctionner un système d'alimentation en énergie (1, 30, 40, 50), de préférence selon l'une quelconque des revendications précédentes, comprenant les étapes consistant à:
- fournir une pluralité de modules de batterie (2) qui peuvent être connectés en série de manière commandable,
- commander les modules de batterie (2) afin de fournir différentes tensions au niveau d'un raccord d'alimentation en courant (5) du système d'alimentation en énergie (1, 30, 40, 50), et
- commuter sélectivement une tension de module (VL+, VL-) fournie par respectivement une unité de batterie (12) de la pluralité de modules de batterie (2), vers un raccord d'entrée (8) et de sortie (9) du module de batterie (2) respectif, au moyen d'un dispositif de commutation (17) afin de fournir de l'énergie électrique au niveau du raccord d'entrée (8) et de sortie (9),
- recevoir un signal d'entrée de commande via une entrée de commande (6, 21) du module de batterie (2) respectif, dans lequel la pluralité de modules de batterie (2) sont chacun amenés dans un état de coupure en réponse à un signal de commande de coupure au niveau de l'entrée de commande (6, 21), dans lequel la tension de module est séparée des raccords d'entrée et de sortie (8, 9), dans lequel
un état de fonctionnement inadmissible respectivement des plusieurs modules de batterie (2) est détecté au moyen d'un circuit de détection (14, 16) respectif,
**caractérisé par le fait que**
l'état de fonctionnement inadmissible détecté est fourni au moyen d'un signal de commande d'erreur au niveau d'une sortie de commande (22) du module de batterie (2) respectif, dans lequel le signal de commande d'erreur de la sortie de commande (22) d'au moins un de la pluralité de modules de batterie (2) est transmis à l'entrée de commande (21) d'au moins un autre de la pluralité de modules de batterie (2) au moyen d'un circuit de commande d'erreur (23, 24, 25), dans lequel la pluralité de modules de batterie (2) comprennent chacun au moins un contact de bouclage (51) qui présente un contact d'entrée (52) et un contact de sortie (53) qui sont reliés, du côté du module, de manière électriquement conductrice l'un à l'autre, et la sortie de commande (22) et/ou l'entrée de commande (21) d'au moins un des modules de batterie (2) est connectée en série, au moyen du circuit de commande d'erreur (23, 24, 25), au contact de bouclage (51) d'au moins un autre des modules de batterie (2).
